(19) Europäisches Patentamt
European Patent Office
Office européen des brevets

(11) EP 4 794 337 A1

(12) EUROPEAN PATENT APPLICATION

(43) Date of publication:
**19.08.2026 Bulletin 2026/34**

(21) Application number: **25315049.4**

(22) Date of filing: **14.02.2025**

(51) International Patent Classification (IPC):
***H04N 19/70*** *(2014.01)* ***G06T 7/11*** *(2017.01)*
***H04N 21/236*** *(2011.01)* ***H04N 21/854*** *(2011.01)*
*H04N 21/434* *(2011.01)*

(52) Cooperative Patent Classification (CPC):
**H04N 19/70; G06T 7/11; H04N 21/236; H04N 21/23614; H04N 21/85406;** H04N 19/46; H04N 21/4345

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Beijing Xiaomi Mobile Software Co., Ltd.**
**Beijing Beijing 100085 (CN)**

(72) Inventors:
- **Alexiou, Evangelos**
  **Beijing, 100085 (CN)**
- **Thomas, Emmanuel**
  **Beijing, 100085 (CN)**
- **Potetsianakis, Emmanouil**
  **Beijing, 100085 (CN)**

(74) Representative: **König, Andreas Rudolf et al**
**Schoppe, Zimmermann, Stöckeler**
**Zinkler, Schenk & Partner mbB**
**Patentanwälte**
**Radlkoferstraße 2**
**81373 München (DE)**

(54) **MULTIPLEXING METADATA WITH IMAGE DATA AS AUXILIARY PICTURES**

(57) A method for encoding a plurality of arrays of data values comprises obtaining a first array comprising a plurality of first fields containing first data values; and obtaining at least a second array comprising a plurality of second fields containing second data values; determining a plurality of multiplexed data values from the plurality of first fields and the plurality of second fields by multiplexing the first data values and the second data values according to a multiplexing rule; and providing the plurality of multiplexed data values.

1700
1716
1702₁
1706
1718
1712
1704
Auxiliary picture 1
Multiplexor
Encoding
Multiplexed picture
1716
Auxiliary picture 2
1702₂
Dictionary
Key
Value
Metadata
1708
1714
Fig. 16a



Processed by Luminess, 75001 PARIS (FR)

## Description

### Technical field

The present application relates to multiplexing image data and some aspects relate to generating associated metadata,

### Background

### General

Auxiliary pictures have been extensively used in image/video processing and computer vision systems for widely-varying purposes, with their usage depending on the use case or the application they serve. Often, auxiliary pictures denote auxiliary pictures of limited bit depth, with binary auxiliary pictures being commonly used.

### Generation of auxiliary pictures

Auxiliary pictures may be generated from different systems, depicting different types of information to satisfy different needs. Some auxiliary pictures may be generated after processing one or more captured pictures, some may be generated by some external process or logic, while some other may be directly captured by sensing devices.

One example of a system generating auxiliary pictures is image segmentation systems. Image segmentation is a process in computer vision and image processing to divide an image into multiple meaningful segments or regions, based on the characteristics of the pixels in the image. This process aims at assisting and simplifying the analysis, interpretation, or processing of an image.

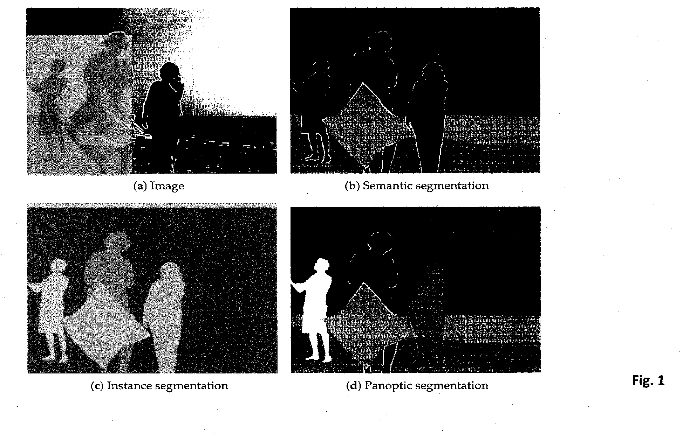

There are three main types of image segmentation, namely, semantic segmentation, instance segmentation, and panoptic segmentation [1]. Semantic segmentation is a process where each sample of an image is assigned to a class from a set of pre-defined classes. Instance segmentation is a process where each sample of an image is assigned to an instance identifier of a class. Panoptic segmentation is a process that combines semantic segmentation and instance segmentation, where each sample of an image is assigned to a class and an instance identifier of that class. An example of the differences between these types is provided in Fig. 1 showing an example of the different types of image segmentation, from [2].

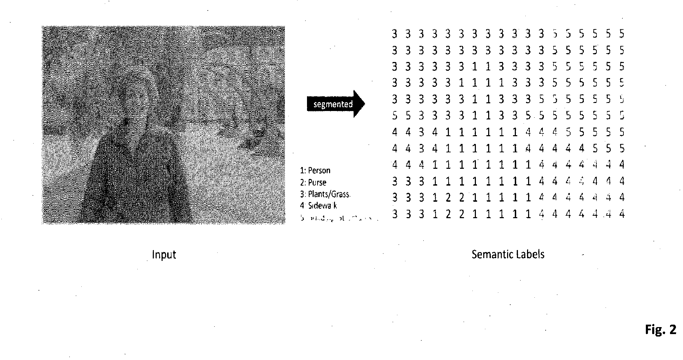

The output of image segmentation is a segmentation mask. A segmentation mask is commonly represented as an auxiliary picture, wherein numeric representations of classes, instances, or both, depending on the type of segmentation, are assigned to sample values. An example of an image and the corresponding segmentation mask after semantic segmentation, is presented in Fig. 2 showing an example of an image and segmentation mask, from [3].

There are two classes of techniques to perform image segmentation: (a) traditional computer vision-based techniques, and (b) learning-based techniques.

Traditional computer vision-based techniques have been extensively studied in the past, with proposed methods relying on thresholding, regions, edge detection, and clustering, among others [4]. Learning-based techniques are becoming increasingly popular, with corresponding methods performed by machine tasks, which can be easily integrated into end-to-end video systems nowadays.

Machine tasks may be applied to already-stored or live-captured media content (e.g., images or videos), and can be distinguished to single-class and multi-class. In the former case, for each sample of an image, it is decided whether it belongs to the single class or not. In the latter case, for each sample of an image, it is decided in which of the multiple classes it belongs to; note that a sample may semantically belong to more than one classes (e.g., face and human), however, only one class is often decided. The computational overhead of single-class machine tasks is typically lower, and the precision is higher [5]. Often, more than one single-class machine tasks are employed.

Examples of available frameworks that provide machine tasks for image segmentation include Google MediaPipe, ARCore Scene Semantics API, iOS Core Image API, and NVIDIA Isaac ROS, among others.

*The MediaPipe Image Segmenter task lets you divide images into regions based on predefined categories. You can use this functionality to identify specific objects or textures, and then apply visual effects such as background blurring. This task includes several models specifically trained for segmenting people and their features within image data, including:*

- *Person and background*
- *Person's hair only*
- *Person's hair, face, skin, clothing, and accessories*

*This task operates on image data with a machine learning (ML) model with single images or a continuous video stream. It outputs a list of segmented regions, representing objects or areas in an image, depending on the model you choose.*

Regarding ARCore Scene Semantics API, according to [7]:

*The Scene Semantics API enables developers to understand the scene surrounding the user, which is needed for many high-quality AR experiences. Built on an ML model, the Scene Semantics API provides real-time semantic information, which complements existing geometric information in ARCore.*

*Given an image of an outdoor scene, the API returns a label for each pixel across a set of useful semantic classes, such a sky, building, tree, road, sidewalk, vehicle, person, and more. In addition to pixel labels, the Scene Semantics API also offers confidence values for each pixel label and an easy-to-use way to query the prevalence of a given label in an outdoor scene.*

*From left to right, examples of an input image, the semantic image of pixel labels, and the corresponding confidence image:*

*The person-segmentation filter creates a mask that contains red pixels in the areas of the input image that are likely to contain people.*

Regarding NVIDIA Isaac ROS, according to [9]:

*Isaac ROS Image Segmentation contains ROS packages for semantic image segmentation.*

*These packages provide methods for classification of an input image at the pixel level by running GPU-accelerated inference on a DNN model. Each pixel of the input image is predicted to belong to a set of defined classes. The output prediction can be used by perception functions to understand where each class is spatially in a 2D image or fuse with a corresponding depth location in a 3D scene.*

Image segmentation systems are among the most relevant for the generation of auxiliary pictures, considering their availability in popular frameworks for video media content.

Yet, auxiliary pictures may be obtained from intermediate steps or as outputs from numerous other systems that may be integrated in end-to-end video pipelines. Such systems may perform edge detection, motion detection, detection and tracking, recognition, classification, video encoding, AR/VR, stereo vision, depth imaging, video editing, filtering, encryption, privacy, scene analysis, scene understanding, text recognition, among other tasks.

Auxiliary pictures may represent edge detection masks, motion masks, region of interest masks, overlay masks, occlusion masks, transparency/opacity masks, binary disparity masks, confidence masks, shape masks, importance masks, visual saliency masks, occupancy masks, text masks, semantical masks, among other types of masks.

Note that one or more of such systems may be used simultaneously by an application to produce one or more corresponding auxiliary pictures. Moreover, such systems may be implemented by traditional image/video processing or computer vision techniques, or by learning-based techniques performed by machine tasks.

## Compression of auxiliary pictures compression

Auxiliary pictures are typically encoded using conventional colour codecs (e.g., H.264/AVC [10], H.265/HEVC [11], H.266/VVC [12]). Depending on the number of components of an auxiliary picture, relevant parameters should be configured suitably for encoding, such as the chroma format and profile, among others. For instance, assuming mono-component auxiliary pictures, a monochrome profile should be selected.

According to H.265/HEVC [11] section 6.2 (Source, decoded and output picture formats):

**Table 6-1 - SubWidthC and SubHeightC values derived from chroma_format_idc and separate_colour_plane_flag**

| chroma_format_idc | separate_colour_plane_flag | Chroma format | SubWidthC | SubHeightC |
|---|---|---|---|---|
| 0 | 0 | Monochrome | 1 | 1 |
| 1 | 0 | 4:2:0 | 2 | 2 |
| 2 | 0 | 4:2:2 | 2 | 1 |
| 3 | 0 | 4:4:4 | 1 | 1 |
| 3 | 1 | 4:4:4 | 1 | 1 |

According to H.265/HEVC [11] section A.3.5 (Format range extensions profiles):

**Table A.1 – Allowed values for syntax elements in the format range extensions profiles**

| Profile for which constraint is specified | chroma_format_idc | bit_depth_luma_minus8 and bit_depth_chroma_minus8 | transform_skip_rotation_enabled_flag, transform_skip_context_enabled_flag, implicit_rdpcm_enabled_flag, explicit_rdpcm_enabled_flag, intra_smoothing_disabled_flag, persistent_rice_adaptation_enabled_flag and log2_max_transform_skip_block_size_minus2 | extended_precision_processing_flag | chroma_qp_offset_list_enabled_flag |
|---|---|---|---|---|---|
| Monochrome | 0 | 0 | 0 | 0 | 0 |
| Monochrome 10 | 0 | 0..2 | 0 | 0 | 0 |
| Monochrome 12 | 0 | 0..4 | 0 | 0 | 0 |
| Monochrome 16 | 0 | – | – | – | 0 |
| Main 12 | 0 or 1 | 0..4 | 0 | 0 | 0 |
| Main 4:2:2 10 | 0..2 | 0..2 | 0 | 0 | – |
| Main 4:2:2 12 | 0..2 | 0..4 | 0 | 0 | – |
| Main 4:4:4 | – | 0 | – | 0 | – |
| Main 4:4:4 10 | – | 0..2 | – | 0 | – |
| Main 4:4:4 12 | – | 0..4 | – | 0 | – |
| Main Intra | 0 or 1 | 0 | 0 | 0 | 0 |
| Main 10 Intra | 0 or 1 | 0..2 | 0 | 0 | 0 |
| Main 12 Intra | 0 or 1 | 0..4 | 0 | 0 | 0 |
| Main 4:2:2 10 Intra | 0..2 | 0..2 | 0 | 0 | – |
| Main 4:2:2 12 Intra | 0..2 | 0..4 | 0 | 0 | – |
| Main 4:4:4 Intra | – | 0 | – | 0 | – |
| Main 4:4:4 10 Intra | – | 0..2 | – | 0 | – |
| Main 4:4:4 12 Intra | – | 0..4 | – | 0 | – |
| Main 4:4:4 16 Intra | – | – | – | – | – |
| Main 4:4:4 Still Picture | – | 0 | – | 0 | – |
| Main 4:4:4 16 Still Picture | – | – | – | – | – |

Another alternative for mono-component auxiliary pictures is to apply a colourization process to transform the mono-component to three-component auxiliary pictures, similarly to [13] that is applied on depth images, before encoding with conventional colour codecs.

For auxiliary pictures of limited bit depth, a common practice is to first map the lower bit depth sample values to higher bit depth sample values (e.g., for a binary auxiliary picture: {0 -> 0, 1-> 255}, for 8-bit encoding) before encoding.

Specifically, video codecs such as H.265/HEVC [11] and H.266/VVC [12] require a bit depth spanning between 8 and 16. According to H.265/HEVC [11], section 6.2 (Source, decoded and output picture formats):

*The number of bits necessary for the representation of each of the samples in the luma and chroma arrays in a video sequence is in the range of 8 to 16, inclusive, and the number of bits used in the luma array may differ from the number of bits used in the chroma arrays.*

There are other encoding methods tailored to the nature of the data carried by an auxiliary picture, such as Run-Length encoding for binary data, however, they are not often deployed in video systems.

**Carriage of auxiliary pictures**

In ISOBMFF [14][14], an auxiliary video track can be added to a file, with the auxiliary video track containing a sequence of auxiliary pictures that is encoded as a conventional video. The auxiliary video track contains a track reference box (with character code 'tref' ) including a reference to the video track.

According to ISOBMFF [14], section 12.1.1 (Media handler):

*Video media uses the 'vide' handler type in the HandlerBox of the MediaBox, as defined in 8.4.3.*

*Auxiliary video media uses the 'auxv' handler type in the* HandlerBox *of the* MediaBox, *as defined in 8.4.3.*

*An auxiliary video track is coded the same as a video track, but uses this different handler type, and is not intended to be visually displayed (e.g., it contains depth information, or other monochrome or colour two-dimensional information). Auxiliary video tracks are usually linked to a video track by an appropriate track reference.*

**Multiplexing of auxiliary pictures**

Traditional spatial and time multiplexing techniques may be used with auxiliary pictures. Considering spatial multiplexing, for instance, the auxiliary pictures could be stitched side-by-side in a vertical or horizontal direction to a composite auxiliary picture. However, in these methods, there is a limitation on the number of auxiliary pictures that can be stitched due to resolution constraints in video codecs. Considering time multiplexing, for instance, the auxiliary pictures could be interleaved across time by increasing the frame rate of the composite auxiliary picture. However, in these methods, there is a limitation on the number of auxiliary pictures that can be interleaved due to frame rate constraints in video codecs, while also solutions for synchronization need to be employed.

The closest method among MPEG carriage technologies for multiplexing pictures is named frame packing and is mainly targeting stereo video.

According to H.265/HEVC [11], section D.3.16 (Frame packing arrangement SEI message semantics):

*This SEI message informs the decoder that the output cropped decoded picture contains samples of multiple distinct spatially packed constituent frames that are packed into one frame, or that the output cropped decoded pictures in output order form a temporal interleaving of alternating first and second constituent frames, using an indicated frame packing arrangement scheme. This information can be used by the decoder to appropriately rearrange the samples and process the samples of the constituent frames appropriately for display or other purposes (which are outside the scope of this Specification).*

***frame_packing_arrangement_type*** *identifies the indicated interpretation of the sample arrays of the output cropped decoded picture as specified in Table D.8.*

*When frame_packing_arrangement_type is equal to 3 or 4, each component plane of the output cropped decoded picture contains all samples (when field_pic_flag is equal to 0) or the samples corresponding to the top or bottom field (when field_pic_flag is equal to 1) of the samples of a frame packing arrangement structure.*

**Table D.8 - Definition of frame_packing_arrangement_type**

| Value | Interpretation |
|---|---|
| 3 | The frame packing arrangement structure contains a side-by-side packing arrangement of corresponding planes of two constituent frames as illustrated in Figure D.4, Figure D.5 and Figure D.8. |
| 4 | The frame packing arrangement structure contains a top-bottom packing arrangement of corresponding planes of two constituent frames as illustrated in Figure D.6 and Figure D.7. |
| 5 | The component planes of the output cropped decoded pictures in output order form a temporal interleaving of alternating first and second constituent frames as illustrated in Figure D.9. |
| *NOTE 2 - When the output time of the samples of constituent frame 0 differs from the output time of the samples of constituent frame 1 (i.e., when field_views_flag is equal to 1 or frame_packing_arrangement_type is equal to 5) and the display system in use presents two views simultaneously, the display time for constituent frame 0 should be delayed to coincide with the display time for constituent frame 1. (The display process is not specified in this Specification.)* | |

***quincunx_sampling_flag*** *equal to 1 indicates that each colour component plane of each constituent frame is quincunx sampled as illustrated in Fig. D.8 and quincunx_sampling_flag equal to 0 indicates that the colour component planes of each constituent frame are not quincunx sampled.*

*When frame_packing_arrangement_type is equal to 5, it is a requirement of bitstream conformance that quincunx_sampling_flag shall be equal to 0.*

***content_interpretation_type*** *indicates the intended interpretation of the constituent frames as specified in Table D.9. Values of content_interpretation_type that do not appear in Table D.9 are reserved for future specification by ITU-T | ISO/IEC and shall not be present in bitstreams conforming to this version of this Specification. Decoders shall ignore frame packing arrangement SEI messages that contain reserved values of content_interpretation_type.*

*For each specified frame packing arrangement scheme, there are two constituent frames that are referred to as frame 0 and frame 1.*

**Table D.9 - Definition of content_interpretation_type**

| Value | Interpretation |
|---|---|
| 0 | Unspecified relationship between the frame packed constituent frames |
| 1 | Indicates that the two constituent frames form the left and right views of a stereo view scene, with frame 0 being associated with the left view and frame 1 being associated with the right view |
| 2 | Indicates that the two constituent frames form the right and left views of a stereo view scene, with frame 0 being associated with the right view and frame 1 being associated with the left view |

*When quincunx_sampling_flag is equal to 0 and frame_packing_arrangement_type is not equal to 5, two ( x, y ) coordinate pairs are specified to determine the indicated luma sampling grid alignment for constituent frame 0 and constituent frame 1, relative to the upper left corner of the rectangular area represented by the samples of the corresponding constituent frame.*

**Prior art**

The prior art for this invention would be the Versatile Supplemental Enhancement Information (VSEI) [15] standard and, specifically, the ***scalability dimension information*** (SDI) SEI message. The prior art provides a method where auxiliary pictures are carried in auxiliary layers, wherein each auxiliary layer carries a different sequence of auxiliary pictures, and is associated to the primary layer that contains a sequence of primary pictures. Each auxiliary layer is associated with one primary layer and one primary layer may be associated with one or more auxiliary layers.

The sequences of primary and auxiliary pictures are contained in the same coded video sequence. The SDI SEI message provides information regarding the identifier of each layer, and the type of each auxiliary picture layer, as specified in Table 15 in VSEI [15] standard section 8.19 (Scalability dimension information SEI message).

Below, the syntax and semantics of the SDI SEI message are provided, as obtained from the VSEI [15] standard section 8.19 (Scalability dimension information SEI message).

***Scalability dimension information SEI message syntax***

| *scalability_dimension_info( payloadSize ) {* | ***Descriptor*** |
|---|---|
| ***sdi_max_layers_minus1*** | *u(6)* |
| ***sdi_multiview_info_flag*** | *u(1)* |
| ***sdi_auxiliary_info_flag*** | u(1) |
| *if{ sdi_multiview_info_flag \| \| sdi_auxiliary_info_flag ) {* | |
| *if( sdi_multiview_info_flag )* | |
| ***sdi_view_id_len_minus1*** | *u (4)* |
| *for( i = 0; i <= sdi_max_layers_minus1; i++ ) {* | |
| ***sdi_layer_id****[ i ]* | *u(6)* |
| *if( sdi_multiview_info_flag )* | |
| ***sdi_view_id_val****[ i ]* | *u(v)* |
| *if( sdi_auxiliary_info_flag )* | |
| ***sdi_aux_id****[ i ]* | *u(8)* |
| *if( sdi_aux_id[ i ] > 0) {* | |
| ***sdi_num_associated_primary_layers_minus1****[ i ]* | *u(6)* |
| *for( j = 0; j <= sdi_num_associated_primary_layers_minus1[ i ]; j++ )* | |
| ***sdi_associated_primary_layer_idx****[ i ][ j ]* | *u(6)* |
| *}* | |

(continued)

| } | |
|---|---|
| } | |
| } | |
| } | |

***Scalability dimension information SEI message semantics***

*The scalability dimension information (SDI) SEI message provides the SDI for each layer in the current CVS, i.e., the CVS containing the SDI SEI message, such as 1) when there may be multiple views, the view ID of each layer; and 2) when there may be auxiliary information (such as depth or alpha) carried by one or more layers, the auxiliary ID of each layer.*

*When an SDI SEI message is present in any AU of a CVS, an SDI SEI message shall be present for the first AU of the CVS. All SDI SEI messages in a CVS shall have the same content.*

***sdi_max_layers_minus1*** *plus 1 indicates the maximum number of layers in the current CVS.*

***sdi_multiview_info_flag*** *equal to 1 indicates that the current CVS may have multiple views and the sdi_view_id_val[ ] syntax elements are present in the SDI SEI message. sdi_multiview_info_flag equal to 0 indicates that the current CVS does not have multiple views and the sdi_view_id_val[ ] syntax elements are not present in the SDI SEI message.*

***sdi_auxiliary_info_flag*** *equal to 1 indicates that one or more layers in the current CVS may be auxiliary layers, which carry auxiliary information, and the sdi_aux_id[ ] syntax elements are present in the SDI SEI message. sdi_auxiliary_info_flag equal to 0 indicates that the current CVS does not have an auxilary layer and the sdi_aux_id[ ] syntax elements are not present in the SDI SEI message.*

***sdi_view_id_len_minus1*** *plus 1 specifies the length, in bits, of the sdi_view_id_val[ i ] syntax element.*

***sdi_layer_id****[ i ] specifies the layer identifier of the i-th layer that may be present in the current CVS.*

***sdi_view_id_val****[ i ] specifies the view identifier of the i-th layer in the current CVS. The length of the sdi_view_id_val[ i ] syntax element is sdi_view_id_len_minus1 + 1 bits.*

*The variable NumViews, specifying the number of views in the current CVS, and the list ViewId, specifying the view identifiers of the views in the current CVS, are derived as follows:*

```
NumViews = 1
if( sdi_multiview_info_flag ) {
    ViewId[ 0 ] = sdi_view_id_val[ 0 ]
    for( i = 1; i <= sdi_max_layers_minus1; i++ ) {
        newViewFlag = 1
        for( j = 0; j < i; j++ )
            if( sdi_view_id_val[ i ] = = sdi_view_id_val[ j ] )
                newViewFlag = 0                                    (47)
        if( newViewFlag ) {
            ViewId[ NumViews ] = sdi_view_id_val[ i ]
            NumViews++
        }
    }
}
```

***sdi_aux_id****[ i ] equal to 0 indicates that the i-th layer in the current CVS does not contain auxiliary pictures. sdi_aux_id[ i ] greater than 0 indicates the type of auxiliary pictures in the i-th layer in the current CVS as specified in Table 15. When sdi_auxiliary_info_flag is equal to 0, the value of sdi_aux_id[ i ] is inferred to be equal to 0.*

*Table 15 - Mapping of sdi_aux_id[ i ] to the type of auxiliary pictures*

| sdi_aux_id[ i ] | Name | Type of auxiliary pictures |
|---|---|---|
| 1 | AUX_ALPHA | Alpha plane |

(continued)

| *sdi_aux_id[ i ]* | *Name* | *Type of auxiliary pictures* |
|---|---|---|
| *2* | *AUX_DEPTH* | *Depth picture* |
| *3..127* | | *Reserved* |
| *128..159* | | *Unspecified* |
| *160..255* | | *Reserved* |
| *NOTE 1 The interpretation of auxiliary pictures associated with sdi_aux_id[ i ] in the range of 128 to 159, inclusive, is specified through means other than the sdi_aux_id[ i ] value.* | | |

*sdi_aux_id[ i ] shall be in the range of 0 to 2, inclusive, or 128 to 159, inclusive, for bitstreams conforming to this version of this document. Although the value of sdi_aux_id[ i ] shall be in the range of 0 to 2, inclusive, or 128 to 159, inclusive, in this version of this document, decoders shall also allow other values of sdi_aux_id[ i ] in the range of 0 to 255, inclusive.*

*If sdi_aux__id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer.*

***sdi_num_associated_primary_layers_minus1****[ i ] plus 1 specifies the number of associated primary layers of i-th layer, which is an auxiliary layer. The value of sdi_num_associated_primary_layers_minus1[ i ] shall be less than the total number of primary layers.*

***sdi_associated_primary_layer_idx****[ i ][ j ] specifies the layer index of the j-th associated primary layer of the i-th layer, which is an auxiliary layer. The value of sdi_aux_id[ sdi_associated_primary_layer_idx[ i ][ j ] ] shall be equal to 0.*

*NOTE 2 An auxiliary layer describes a property of and applies to its associated primary layers.*

**Summary**

According to an embodiment, a method for encoding a plurality of arrays of data values is provided, the method comprising:

obtaining a first array comprising a plurality of first fields containing first data values; and

obtaining at least a second array comprising a plurality of second fields containing second data values;

determining a plurality of multiplexed data values from the plurality of first fields and the plurality of second fields by multiplexing the first data values and the second data values according to a multiplexing rule;

providing the plurality of multiplexed data values.

According to an embodiment, the method further comprises: generating metadata describing the multiplexing rule; and providing the metadata, e.g., together with the plurality of multiplexed data values.

According to an embodiment, the method further comprises: determining association information associating a tuple comprising a first data value and a second data value on the one hand with the multiplexed data value on the other hand; such that the multiplexing rule is based on the association information.

According to an embodiment, providing the plurality of multiplexed data values comprises: encoding a multiplexed array comprising the plurality of multiplexed data values together with the metadata generated for describing the multiplexing rule.

According to an embodiment, metadata generated for describing the multiplexing rule is provided as part of a video bitstream; wherein the multiplexed data values are encoded as a video frame; and wherein the metadata is related to reconstructing the first array and the second array from the multiplexed data values.

According to an embodiment, metadata generated for describing the multiplexing rule is signalled using at least one Supplemental Enhancement Information, SEI, message; and/or using an auxiliary picture.

According to an embodiment, the at least one SEI message carries multiplexing information comprising a number of auxiliary pictures, a type and a bit depth of each auxiliary picture, and association information associating a tuple comprising a first data value and a second data value on the one hand with the multiplexed data value on the other hand; such that the multiplexing rule is based on the association information; and/or
comprises at least one of:

information specifying a number of the auxiliary pictures contained in the multiplexed picture;

information specifying an identifier of the type of the i-th auxiliary picture;

information specifying a bit depth of the i-th auxiliary picture;

information specifying a number of the multiplexed picture sample values;

information specifying a j-th multiplexed picture sample value; and/or

information specifying an auxiliary picture sample value of the k-th auxiliary picture that corresponds to the j-th multiplexed picture sample value;

information specifying a width of the i-th auxiliary picture.

information specifying a height of the i-th auxiliary picture.

information specifying whether the i-th auxiliary picture is spatially aligned;

information specifying an identifier of the type of spatial alignment applied to the i-th auxiliary picture;

information specifying an identifier of the algorithm used for resampling the i-th auxiliary picture;

information specifying a value used to indicate the undefined sample value for the i-th auxiliary picture;

information specifying a column of the multiplexed picture that corresponds to the first column of the i-th auxiliary picture;

information specifying a column of the multiplexed picture that corresponds to the last column of the i-th auxiliary picture;

information specifying a row of the multiplexed picture that corresponds to the first row of the i-th auxiliary picture;

information specifying a row of the multiplexed picture that corresponds to the last row of the i-th auxiliary picture;

a dictionary; and

temporal information which comprises whether each auxiliary picture is temporally aligned and/or related parameters if temporal alignment is applied.

According to an embodiment, the multiplexed data values are part of a multiplexed picture that carries one auxiliary picture;

wherein a sequence of multiplexed data is encoded as a sequence of multiplexed pictures and constitutes an auxiliary layer associated to a primary layer;
wherein the sequence of multiplexed data corresponds to the sequence of multiplexed pictures, constituting the multiplexed auxiliary layer, and the primary layer contains the primary picture sequence; wherein the metadata is generated to interpret the multiplexed picture sample values,
wherein said metadata is signalled in a SEI message;
wherein the SEI message comprises information indicating an auxiliary picture as a multiplexed picture.

According to an embodiment, metadata generated for describing the multiplexing rule is provided as part of a file format.
According to an embodiment, the metadata is signalled using structures in an ISO Base Media File Format; or files related to a file format standard;

wherein multiplexing information is signalled as untimed or static metadata in a box contained in a *trak* structure; and

the multiplexed data values is carried as a video track; or

the multiplexed data values is carried as an auxiliary video track next to a primary video track that carries a sequence of primary pictures.

According to an embodiment, a method for decoding a plurality of multiplexed data values is provided, the method comprising:

obtaining the plurality of multiplexed data values;

deriving a demultiplexing rule for the multiplexed data values, e.g., from metadata; and

reconstructing, from each of the plurality of multiplexed data values at least a first data value and a second data value using the demultiplexing rule.

According to an embodiment, a device comprising a processing unit is provided, configured for executing at least one of:
the method for encoding described herein; and a method for decoding as described herein.
According to an embodiment, a data container is obtained by providing the plurality of multiplexed data values according to a method described herein.
According to an embodiment, a data stream having encoded thereinto multiplexed data values is obtained by a method described herein.
According to an embodiment, a non-transitory computer-readable storage medium comprises instructions which, when executed by a computer, cause the computer to carry out a method as described herein.

## Disadvantages of Prior art

The prior art provides a method to carry different sequences of auxiliary pictures as different auxiliary layers in a video coded sequence. However, considering the carriage of more than 1 sequences of auxiliary pictures of limited bit depth, this approach leads to the following issues:

- The technique leads to inefficient usage of bits for representation, encoding, and storage. Considering auxiliary pictures of limited bit depth, despite the fact that only n bits per sample are needed per auxiliary picture, with n<8, in practice, 8 bits are being used to represent (i.e., representation bit depth), encode (i.e., encoder bit depth) and store (i.e., memory reads are by default byte-level operations and memory slots are read in 8-bit intervals) them. For example, assuming K binary auxiliary pictures, the technique would require Kx8 bits to represent, encode, and store them, which becomes exponentially inefficient as K is increasing. This calculation is assuming a monochrome profile, i.e. 8 bits per sample, but considering commonly used 4:2:0 chroma format, the number of bits per sample on overage would be even greater than 8.
- For each auxiliary sequence of masks, this corresponds to an independent layer in the video coded bitstream. This means that this technique leads to increased computational complexity, since there is a need one encoder instance and one decoder instances per auxiliary layer, to encode and decode them, respectively.
  ◦ NOTE Primary and auxiliary pictures are contained in the same coded video sequence; however, there are no dependencies between them, implying that different sub-encoding and sub-decoding modules are used (of the same codec).

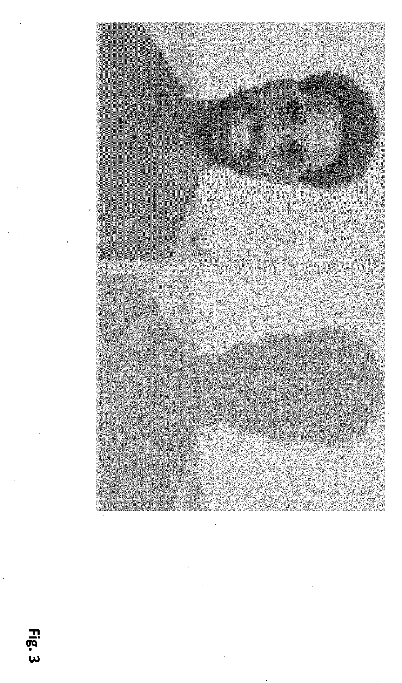

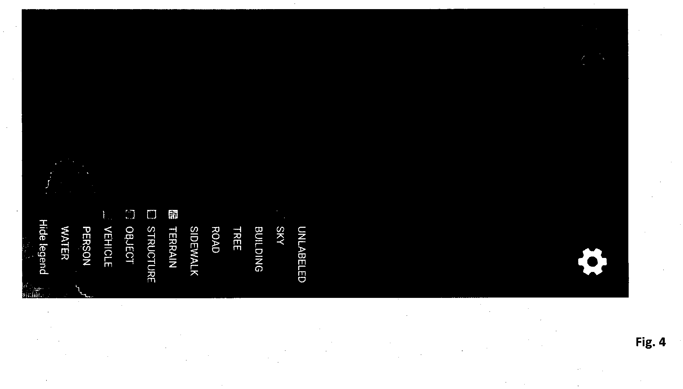

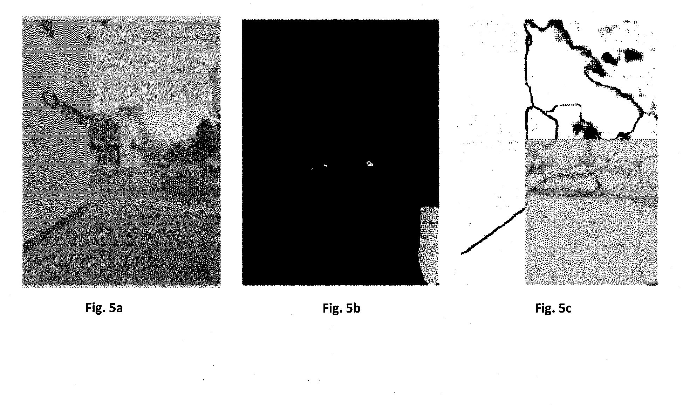

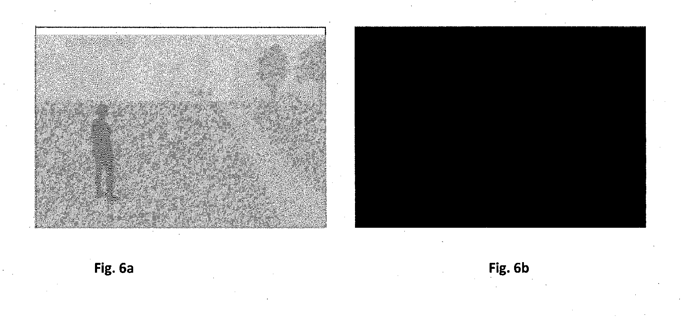

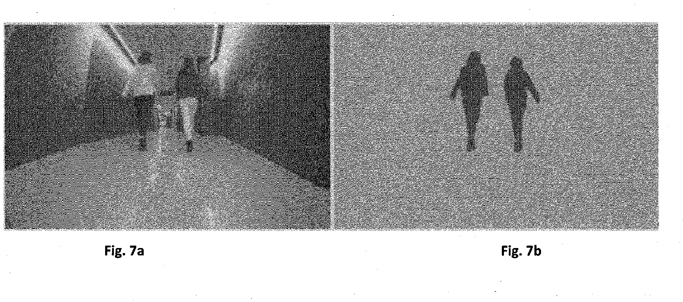

Segmentation of images is illustrated in connection with Figs. 3-6, Fig. 7a and Fig. 7b.

## BRIEF DESCRIPTION OF THE DRAWINGS

The drawings are explanatory and serve to explain the present disclosure, and are not to be construed to limit the present disclosure to the illustrated embodiments.

Fig. 1 shows an example of the different types of image segmentation;
Fig. 2 shows an example of an image and segmentation mask;
Fig. 3 shows an example of an image and the segmentation mask using MediaPipe framework from [6];
Fig. 4 shows an example of a semantic segmentation mask using Scene Scemantics API in ARCore from [7];
Fig. 5a-c shows an example of an input image (left), segmentation mask (middle) and confidence mask (right)

using Scene Semantics API in ARCore from [7],

Fig. 6a-b shows an example of segmentation mask using personSegmentation built-in function of Core Image API in iOS from [8],

Fig. 7a-b shows an example of segmentation mask using NVIDIA Isaac ROS image segmentation, from [9]

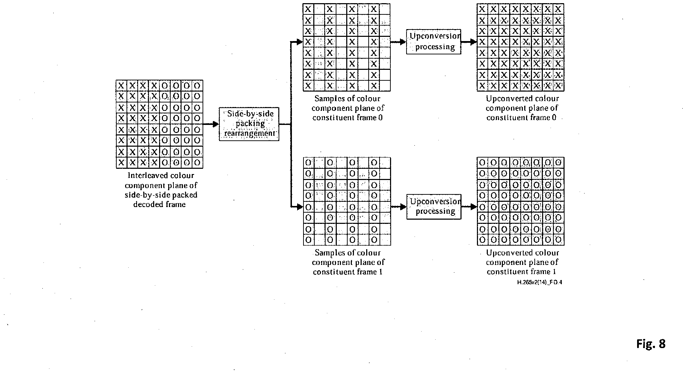

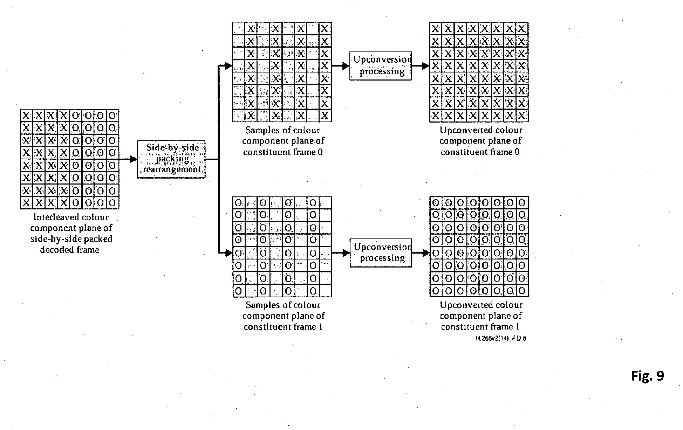

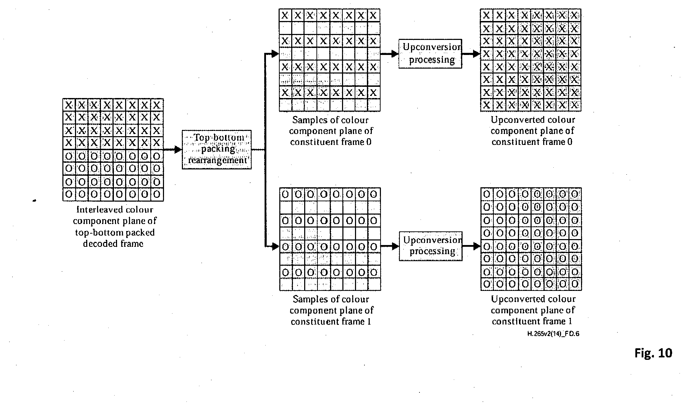

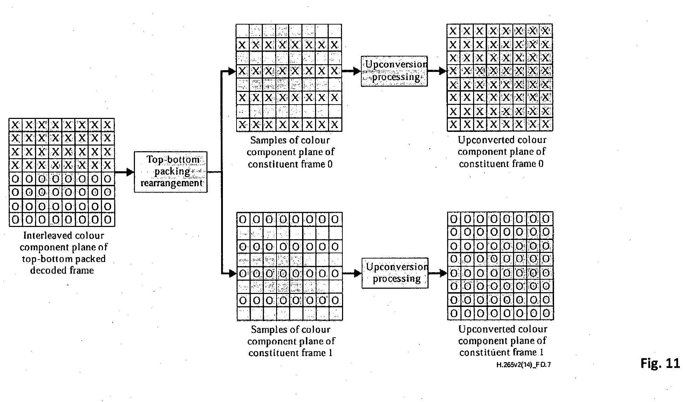

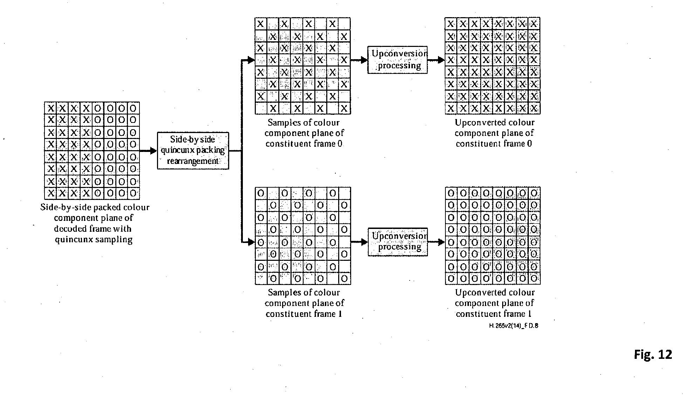

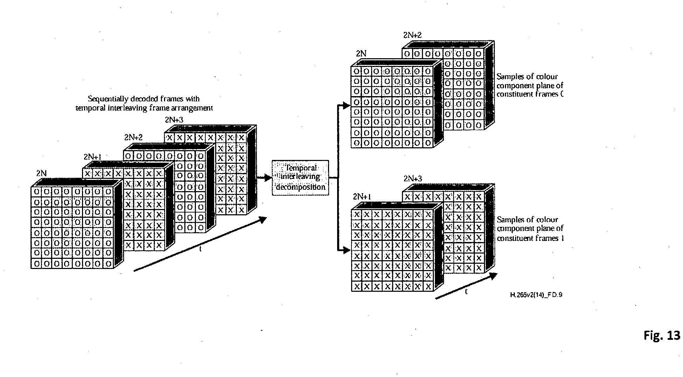

Figs. 8-13 show illustrations relating to a rearrangement and upconversion of side-by-side and top-bottom frame packing arrangement in H.265/HEVC [11];

Fig. 14 shows a block diagram of a system diagram of a representative application scenario for real-time transmission of sequences of auxiliary pictures from a local to a remote device underlying embodiments of the present disclosure,

Fig. 15a-b show a block diagram of an updated system diagram per embodiments of the present invention, introducing two new steps according to an embodiment of the present disclosure,

Fig. 16a-b show a schematic block diagram relating to a key idea of embodiments showing a system to multiplex auxiliary pictures,

Fig. 17a-b show a schematic block diagram similar to Fig. 16a-b according to embodiments of the present disclosure where instead of auxiliary pictures other types of source pictures are multiplexed;

Fig. 18 shows a schematic block diagram according to embodiments of the present disclosure showing a resolution of the source 2d array X is 4x4, and the resolution of the source 2d array Y is 2x2,

Fig. 19 shows a schematic block diagram according to embodiments of the present disclosure showing a resolution of the source 2d array X is 4x4, and the resolution of the source 2d array Y is 2x2,

Fig. 20 shows a schematic block diagram according to embodiments of the present disclosure showing a resolution of the source 2d array X is 4x4, and the resolution of the source 2d array Y is 2x2,

Fig. 21 shows a schematic block diagram according to embodiments of the present disclosure showing a primary picture and source 2d arrays X, Y, wherein the spatial origins of the source 2d arrays are different than the spatial origin of the primary picture, indicated by the offset vectors $\vec{d}_X$ and $\vec{d}_Y$,

Fig. 22 shows a schematic block diagram according to embodiments of the present disclosure showing a primary picture and source 2d arrays X, Y, wherein the spatial origins of the source 2d arrays are different than the spatial origin of the primary picture, indicated by the offset vectors $\vec{d}_X$ and $\vec{d}_Y$;

Fig. 23 shows a schematic block diagram according to embodiments of the present disclosure showing sequences of source 2d arrays X (diagonally hatched), Y (horizontally hatched), and Z (vertically hatched) that are not temporally aligned but do have an overlap in their timeline;Fig. 24 shows ISOBMFF file with untimed metadata for multiplexing information that may be used in embodiments;

Fig. 25 shows a schematic illustration ISOBMFF file with untimed metadata for multiplexing information, a primary track carrying a sequence of primary pictures and an auxiliary video track carrying a sequence of multiplexed pictures that may be used in embodiments; and

Fig. 26 is a block diagram illustrating an electronic device according to embodiments of the present disclosure.

## Detailed description of the invention

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

## Application scenario

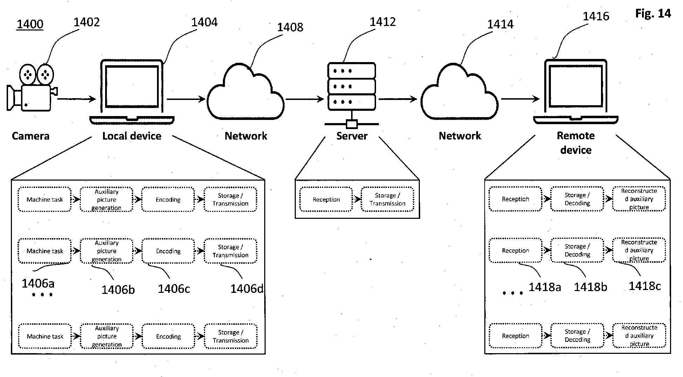

A representative application scenario for the invention is live streaming of sequences of auxiliary pictures. In this example, presented in a system 1400 shown in Fig. 14, a camera 1402 is attached to the local device 1404 to capture a sequence of primary pictures. The sequence of primary pictures are provided as input to one or multiple machine tasks 1406a which process the sequence of primary pictures and generate 1406b sequences of auxiliary pictures. The sequences of auxiliary pictures are encoded 1406c, potentially stored locally 1406d, and transmitted over network 1408 to a server 1412. The server 1412 potentially stores the encoded sequences of auxiliary pictures for future access on demand and transmits them over network 1414 that may be same or different from network 1408 to a remote device 1416, where the sequences of auxiliary pictures video are received 1418a, potentially stored, decoded 1418b and reconstructed 1418c, before passing them over to an application. Other variants of this example may include:

- The captured sequences of primary pictures could be encoded, stored, and streamed together with the sequences of auxiliary pictures.
- The sequences of auxiliary pictures and/or the sequences of primary pictures could be already captured (i.e., video on demand instead of live streaming).
- The sequences of auxiliary pictures and/or the primary sequences of pictures could be processed and/or transcoded at the server.

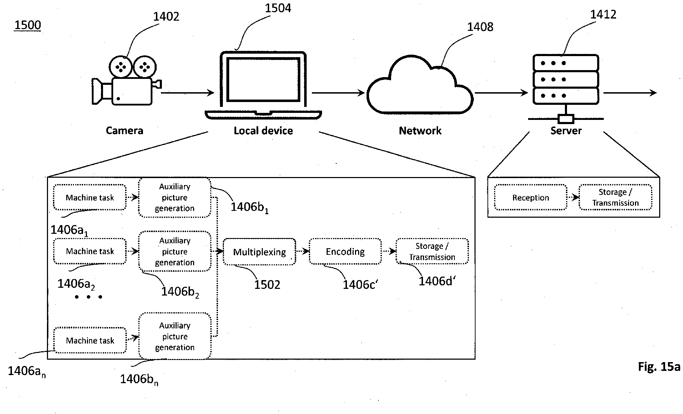

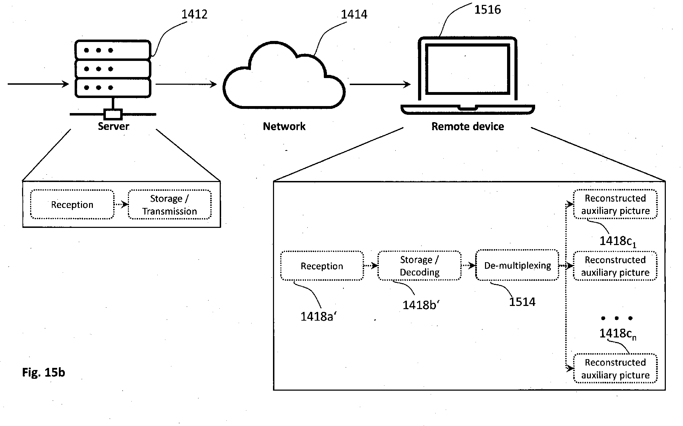

Embodiments of the present invention propose a solution that can be implemented by introducing a multiplexing step 1502 and a de-multiplexing step 1514 in the existing pipeline of Fig. 14, shown in Fig. 15a and Fig. 15b. At the local device 1504, the multiplexing step 1502 is introduced to multiplex the sequences of auxiliary pictures into a sequence of multiplexed pictures. The sequence of multiplexed pictures is encoded 1406c' together with associated metadata and transmitted. At the remote device 1516, the encoded data are received and decoded. The de-multiplexing step 1514 is introduced to reconstruct the sequences of auxiliary pictures 1518c from the sequence of multiplexed pictures and the associated metadata. It is noted that preferred embodiments described herein relate to generating, providing and/or transmitting metadata based on an encoding process or apparatus and/or to, receiving, decoding and/or using metadata at an decoding process or device, the metadata, for example, describing a multiplexing rule used for obtaining multiplexed data values. On that aspect, a method of multiplexing in accordance with embodiments does not require per se the generation of metadata. It may be sufficient, at the decoder, to receive, decode or otherwise obtaining this information, e.g., from a data memory. As a result, for a given system, in a controlled environment where the multiplexing information is predetermined, e.g., constant or previously determined, the generating, encoding and transmission of metadata in connection with the multiplexing rule may be optional. However, generating the metadata and transmitting allows a greater flexibility.

## Use cases and applications

This section is not meant to be exhaustive and simply shows examples of use cases and applications where auxiliary pictures are used. Specifically, as part of these applications, auxiliary pictures may be locally or remotely stored, may be delivered to the edge or a server for processing purposes, or may be streamed to a remote user.

Auxiliary pictures may be used by an image segmentation method. Image segmentation is a computer technology for the automatic partitioning of an image into regions that belong to a certain class (e.g., humans, animals, cars, buildings); a different auxiliary picture may be used for categorization per class, especially if the classes have semantical overlap between them. Image segmentation is important in a number of applications such as autonomous vehicles, surveillance, robotics, XR, and visual enhancements, among others.

Auxiliary pictures may be used by an object classification method. Object classification is a computer technology for the automatic identification of the class to which one or more objects in a picture belong to (e.g., humans, animals, cars, buildings). Object classification is important in a number of applications, such as autonomous vehicles, and surveillance, among others.

Auxiliary pictures may be used by an object recognition method. Object recognition is a computer technology for the automatic identification and classification of objects in a picture. Object recognition is important in a number of applications, such as autonomous vehicles, surveillance, robotics, and XR, among others.

Auxiliary pictures may be used by an object detection method. Object detection is a computer technology for the automatic recognition and localization of objects in a picture. Object detection is important in a number of applications, such as autonomous vehicles, surveillance, robotics, and XR, among others.

Auxiliary pictures may be used by an object tracking method. Object tracking is a computer technology for the automatic detection and tracking of objects typically in space (i.e., positions within video frames) and time (i.e., movements across video frames) in a sequence of pictures. Object tracking is important in a number of applications, such as

autonomous vehicles, surveillance, robotics, and XR, among others.

Auxiliary pictures may be used by a motion detection method. Motion detection is a computer technology for the automatic identification of changes in position of objects or regions in a sequence of pictures. Motion detection is important in a number of applications, such as autonomous vehicles, surveillance, robotics, and human-computer interaction, among others.

Auxiliary pictures may be used by an edge detection method. Edge detection is a computer technology for the identification of boundaries and contours in a picture. Edge detection can be used in a number of applications, such as image segmentation, object recognition, object detection, autonomous vehicles, and surveillance, among others.

Auxiliary pictures may be used by a shape analysis method. Shape analysis is a computer technology for the analysis of the shape, structure, and spatial properties of objects or regions in a picture. Shape analysis can be used in a number of applications, such as image segmentation, object classification, object recognition, object detection, and autonomous vehicles, among others.

Auxiliary pictures may be used by a region of interest processing module. A region of interest processing module identifies or annotates regions of different interest in a picture. A region of interest processing module may be used in a number of applications, such as video compression, visual saliency, XR, encryption and privacy, surveillance, autonomous vehicles, and video editing, among others.

Auxiliary pictures may be used by a scene composition module. A scene composition module combines multiple regions or overlays for rendering a composite view. A scene composition module may be used in a number of applications, such as video broadcasting, video editing, post-production, XR, and computer graphics, among others.

Auxiliary pictures may be used by a video editing module. A video editing module enables the application of visual enhancements and artistic visual effects in pictures or videos comprising filtering, beautification, stylizing, sketching, outline, and silhouette effects, among others. A video editing module may be used in a number of applications, such as content creation, content sharing, video production, and social media platforms, among others.

Auxiliary pictures may be used by an XR application. In XR applications, scene analysis and scene understanding are essential for blending virtual assets with the real-world scene and enabling spatial computing. In XR applications, the semantic annotation of the scene, the positioning of overlays, or the localization for the application of visual enhancements in the rendered view of a user, may use auxiliary pictures.

Auxiliary pictures may be used by a stereo vision application. In stereo vision, occlusions, invalid samples, or disparity masks are required to indicate regions that require different handling. Such masks may be represented in the form of auxiliary pictures.

**Technical problem solved by the solution**

This invention pertains to the domain of video coding systems. The technical problem solved by this invention is the efficient carriage (and representation) of multiple auxiliary pictures of limited bit depth.

In many applications, multiple auxiliary pictures depicting various aspects of a scene are carried from a capturing device to a receiving device, as presented in section Use cases and application. Current methods typically involve using a distinct layer for each sequence of auxiliary pictures, wherein each layer is encoded separately. However, such methods have disadvantages, such as increased overhead in terms of memory and computational resources, as presented in section Disadvantages of Prior art.

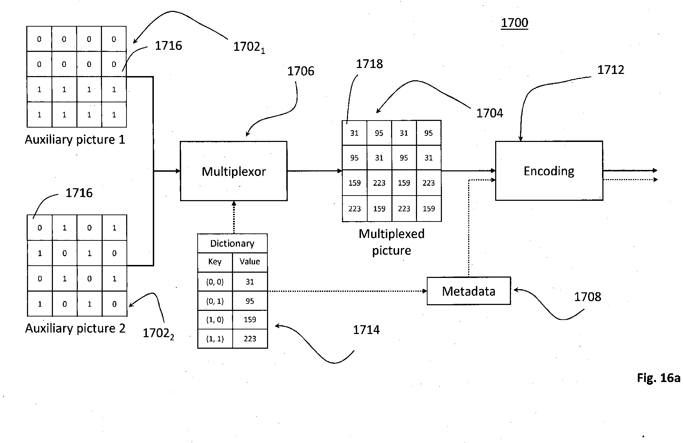

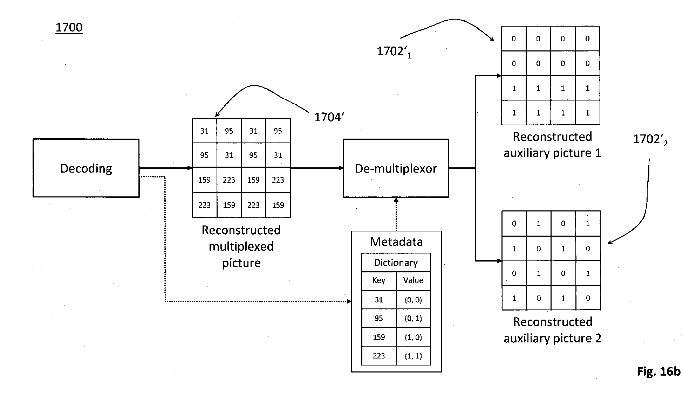

As described, e.g., making reference to Fig. 16a-b, one of the key ideas of this invention is to multiplex at the sample level more than one auxiliary picture $1702_1$, $1702_2$, ... into one multiplexed picture 1704, e.g., using a multiplexor 1706, the multiplexed picture 1704 being combined with associated metadata 1708, e.g., using an encoding unit or process 1712 to enable the reconstruction of the auxiliary pictures by de-multiplexing the multiplexed picture. The metadata may comprise a dictionary 1714 of key-value pairs or other association information indicating the mapping from ordered combinations of auxiliary picture sample values 1716 to multiplexed picture sample values 1718, and information related to the type (e.g., nature) and characteristics (e.g., bit depth) of each auxiliary picture. The technical effects of the invention are presented in section Beneficial effects of the solution.

A graphic illustration of the key idea is presented in Fig. 16a-b.

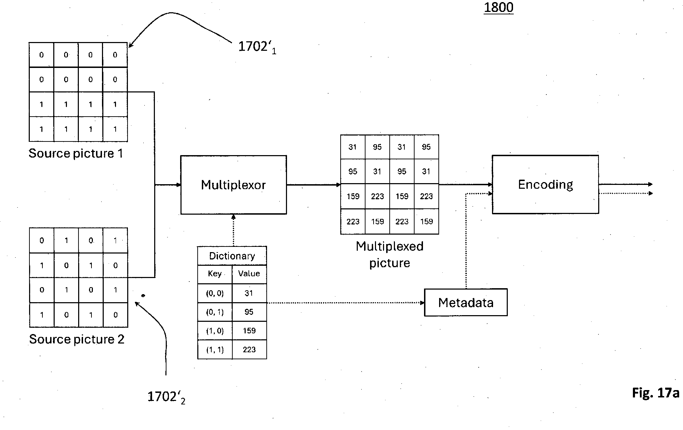

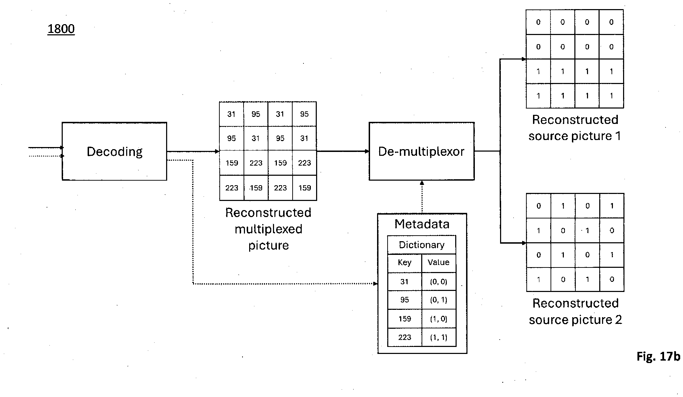

As shown in Fig. 16a-b, a key idea of this invention may be implemented by a capturing device or local device such as local device 1504 and/or at a remote device 1516. At a capturing device or local device, at least two auxiliary pictures are multiplexed into a multiplexed picture 1704, using a dictionary that maps ordered combinations of auxiliary picture sample values (keys) to multiplexed picture sample values (values). The multiplexed picture and associated metadata are encoded and transmitted. At a receiving device or remote device, the encoded data are received and decoded. The obtained reconstructed multiplexed picture is de-multiplexed into the reconstructed auxiliary pictures, using the obtained metadata. As shown in Fig. 17a-b, instead of an auxiliary picture, also other types of source pictures $1702'_1$, $1702'_2$ may be used according to an embodiment.

**Technical description of the solution**

According to an embodiment, a method for encoding a plurality of arrays of data values that may be executed, e.g., at an encoding device or a local device such as device 1504 comprises:

obtaining a first array comprising a plurality of first fields containing first data values; and obtaining a second array comprising a plurality of second fields containing second data values, see, e.g., steps 1 and 2 below;

determining a plurality of multiplexed data values [means: tuple] from the plurality of first fields and the plurality of second fields by multiplexing the first data values and the second data values according to a multiplexing rule, see, e.g., step 4 below;

generating metadata identifying the multiplexing rule, see, e.g., step 5 below; and

providing the plurality of multiplexed data values and the metadata, see, e.g., step 6 below.

The arrays of data values may each be a 2d array and/or may be referred to as a source array.
According to a preferred embodiment a device, e.g., the local device 1504, may implement a method comprising additional steps, e.g., to arrive a at a method comprising the following steps:

**Steps**

A capturing device:

1. Obtaining a first source 2d array and a second source 2d array.
2. Determining a multiplexed 2d array characterized by a bit depth.
3. Determining a dictionary that maps 2-tuples (i.e., keys) to values, wherein:

    ◦ A 2-tuple comprises two co-located sample values, with the first co-located sample belonging to the first source 2d array and the second co-located sample belonging to the second source 2d array.
    ◦ A value comprised between a min and a max value defined by the multiplexed 2d array bit depth.

4. Generating the multiplexed 2d array, wherein for a multiplexed 2d array sample in a location (x,y):

    ◦ A 2-tuple is generated by the sample value of the first co-located sample belonging to the first source 2d array in the location (x,y) and the sample value of the second co-located sample belonging to the second source 2d array in the location (x,y).
    ◦ The generated 2-tuple is used to identify the corresponding value according to the dictionary.
    ◦ The identified value is assigned to the multiplexed 2d array sample value in the location (x,y).

5. Generating metadata comprising the multiplexing information.
6. Encoding the multiplexed 2d array along with the generated metadata.

Those steps 1 through 6 may be referred to as technical steps in the following to make reference to further embodiments.
A receiving device such as the remote device 1516 a method may comprise one or more of:

1. Obtaining the encoded multiplexed 2d array and metadata.
2. Decoding the multiplexed 2d array.
3. Parsing the metadata comprising the multiplexing information.
4. Reconstructing the first source 2d array and the second source 2d array from the decoded multiplexed 2d array and the parsed metadata.

A method for decoding a multiplexed picture may comprise, e.g.:

obtaining a plurality of multiplexed data values and metadata;

deriving a demultiplexing rule from the metadata; and

reconstructing, from each of the plurality of multiplexed data values a first data value and a second data value [possibly at least a third data value] using the demultiplexing rule.

**2D arrays**

Note 1 a number of n 2d arrays of the same or different bit-depth

The basic embodiment assumes that the two source 2d arrays contain binary sample values. In other embodiments, n source 2d arrays, with n>=2, that contain sample values of the same or different bit depth equal to or larger than 1 may be used (e.g., k 1-bit source 2d arrays, l 2-bit source 2d arrays, m 3-bit source 2d arrays, etc.). In such embodiments, technical steps may be adjusted accordingly.

For instance, in technical step 3 of the capturing device, the dictionary may specify n-tuples, wherein an n-tuple comprises n co-located sample values, with the i-th co-located sample value belonging to the i-th source 2d array, with $i \in \{1,2, ..., n\}$. For example, assuming a first 1-bit source 2d array X, a second 1-bit source 2d array Y, and a third 2-bits source 2d array Z, a 3-tuple may be defined as $(x_i, y_i, z_i)$, with $x_i \in \{0,1\}$, $y_i \in \{0,1\}$ and $z_i \in \{0,1,2,3\}$. Assuming also a multiplexed 2d array bit depth equal to 8, the dictionary values may be obtained as shown in Table 1.

Table 1- Source 2d array sample values, 3-tuples, and corresponding dictionary values.

| Source 2d array sample values | | | Dictionary | |
|---|---|---|---|---|
| X | Y | Z | Key (3-tuple) | Value (value) |
| 0 | 0 | 0 | (0, 0, 0) | 0 |
| 0 | 0 | 1 | (0, 0, 1) | 15 |
| 0 | 0 | 2 | (0, 0, 2) | 31 |
| 0 | 0 | 3 | (0, 0, 3) | 47 |
| 0 | 1 | 0 | (0, 1, 0) | 63 |
| 0 | 1 | 1 | (0, 1, 1) | 79 |
| 0 | 1 | 2 | (0, 1, 2) | 95 |
| 0 | 1 | 3 | (0, 1, 3) | 111 |
| 1 | 0 | 0 | (1, 0, 0) | 127 |
| 1 | 0 | 1 | (1, 0, 1) | 143 |
| 1 | 0 | 2 | (1, 0, 2) | 159 |
| 1 | 0 | 3 | (1, 0, 3) | 175 |
| 1 | 1 | 0 | (1, 1, 0) | 191 |
| 1 | 1 | 1 | (1, 1, 1) | 207 |
| 1 | 1 | 2 | (1, 1, 2) | 223 |
| 1 | 1 | 3 | (1, 1, 3) | 239 |

In such embodiments, additional metadata may be included to signal the bit depth of each source 2d array and the number of source 2d arrays, n.

Note 2 Source 2d arrays and picture components

The basic embodiment assumes that the source 2d arrays contain the sample values of mono-component (i.e., mono-chromatic) pictures. In other embodiments, a source 2d array may contain the sample values of one component from a multi-component picture. For example, n source 2d arrays may contain the sample values of the same component (e.g., R) from n multi-component pictures (e.g., RGB); possibly, a subset of the technical steps (i.e., 2-4) may be repeated for each component to generate a multi-component multiplexed 2d array. Or, n source 2d arrays may contain the sample values of n components (e.g., R, G and B) from the same multi-component picture (e.g., RGB). Provided that the spatial relationship between the n components to be multiplexed is the same as the basic embodiment assumes (i.e., the same spatial resolution and 1-1 samples correspondence based on the same sample location), the same technical steps may be

applied. If this assumption is not satisfied, additional technical steps may be required (see notes 3 and 4).

**Spatial relationship**

Note 3 Spatial resolution alignment between source 2d arrays

The basic embodiment assumes that the spatial resolutions of the source 2d arrays are the same. In other embodiments, this may not be the case. In such embodiments, the spatial resolutions of the source 2d arrays must get aligned before generating the multiplexed 2d array in technical step 4. To perform this alignment, different methods may be used. Below, exemplary methods are presented.

Method 1: Mapping the spatial resolution of the smaller to the larger source 2d array

One method is to map the spatial resolution of the smaller source 2d array to the larger source 2d array. The advantage of this method is no information loss; the disadvantage is processing and carriage of more than the original information.

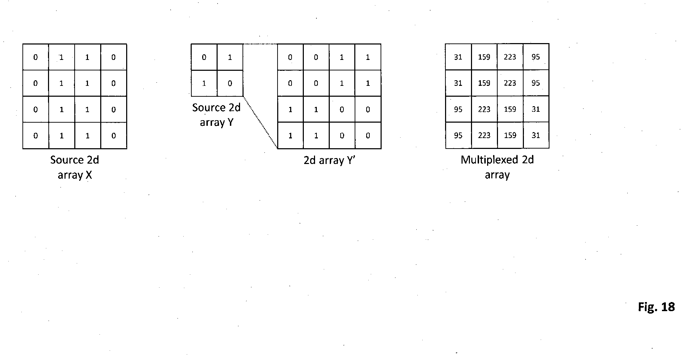

In primary embodiments, resampling may be applied to the smaller source 2d array. An example is shown in Fig. 18.

In Fig. 18, the example resolution of the 1-bit source 2d array X is 4x4, and the resolution of the 1-bit source 2d array Y is 2x2. The source 2d array Y is resampled and the 2d array Y' is obtained, which is used to generate the multiplexed 2d array. The dictionary in this case is: {((0, 0), 31), ((0, 1), 95), ((1, 0), 159), ((1, 1), 223)}. The example notation used for a dictionary of N entries, is {($key_1$, $value_1$), ($key_2$, $value_2$), ..., ($key_N$, $value_N$)}. Note that any other resolution may be used.

There are different algorithms that could be selected for resampling depending on the application or the characteristics of the source 2d arrays (e.g., bilinear interpolation, bicubic interpolation, nearest neighbor, averaging area, etc.). For example, considering a larger and a smaller source 2d array containing sample values from the luma and a chroma component of an image represented using a 4:2:0 chroma format, respectively, the known spatial relationship between luma and chroma samples may be considered to choose a suitable resampling algorithm. In this example, the nearest neighbor algorithm may be preferred, wherein for each sample, the same sample value is assigned to its 2x2 neighbourhood, thus, avoiding potential precision errors due to interpolation-based algorithms, and potential bitrate waste due to varying neighboring sample values.

In such embodiments, additional metadata may be included to signal the resampling information for the smaller source 2d array. The resampling information may comprise an indicator of the resampling operation, parameters of the resampling (e.g., upsampling factors, algorithms, etc.), and/or the original spatial resolution of the smaller source 2d array, among others; the original spatial resolution of the smaller source 2d array may be used to possibly imply resampling parameters (e.g., upsampling factors). Such embodiments may use further technical step(s).

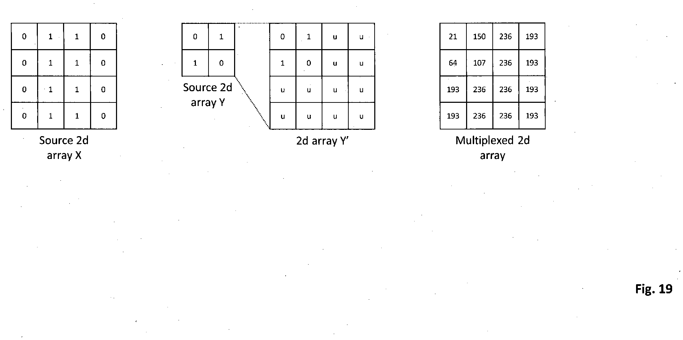

In alternative embodiments, padding may be applied to the smaller source 2d array using a new sample value that represents an undefined sample value. This undefined sample value should be considered when determining the dictionary. An example is shown in Fig. 19.

In Fig. 19, the example resolution of the 1-bit source 2d array X is 4x4, and the resolution of the 1-bit source 2d array Y is 2x2. The source 2d array Y is padded and the 2d array Y' is obtained (u indicates the undefined sample value), which is used to generate the multiplexed 2d array. The dictionary in this case is: {((0, 0), 21), ((0, 1), 64), ((1, 0), 107), ((1, 1), 150), ((0, u), 193), ((1, u), 236)}.

In such embodiments, additional metadata may be included to signal the padding information for the smaller source 2d array. The padding information may comprise an indicator of the padding operation, the selected undefined sample value, and/or the original spatial resolution of the smaller source 2d array, among others. Such embodiments may use further technical step(s).

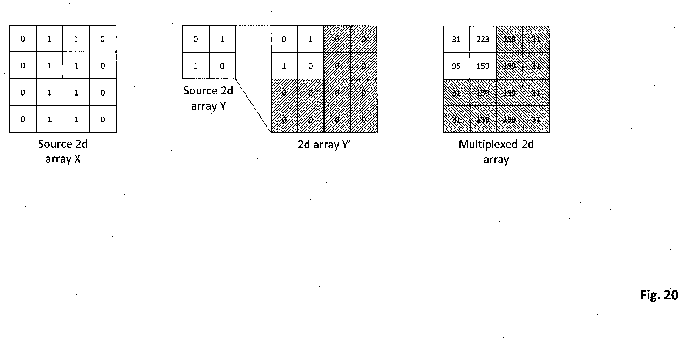

In alternative embodiments, padding may be applied to the smaller source 2d array using valid sample values, wherein additional spatial information may be provided to distinguish padded from non-padded valid sample values. An example is shown in Fig. 20.

In Fig. 20, the example resolution of the 1-bit source 2d array X is 4x4, and the resolution of the 1-bit source 2d array Y is 2x2. The source 2d array Y is padded and the 2d array Y' is obtained, which is used to generate the multiplexed 2d array. Padded regions of the 2d array Y' are indicated with grey. In the multiplexed 2d array, the white region specifies that sample values corresponding to both source 2d arrays are valid, while the light grey region specifies that only sample values corresponding to the source 2d array X are valid. The dictionary in this case is: {((0, 0), 31), ((0, 1), 95), ((1, 0), 159), ((1, 1), 223)}.

The valid sample values used for padding may be selected such as to promote bitrate gains (e.g., using the same valid sample value increases redundancy) or to reduce computations, and should be discarded at the receiving device as they are non-meaningful.

In such embodiments, additional metadata may be included to signal the padding information and the spatial information for the smaller source 2d array. The padding information may comprise an indicator of the padding operation, and/or the original spatial resolution of the smaller source 2d array, among others. The spatial information may comprise spatial coordinates (i.e., start and end of x-y), bounding boxes, or binary masks to indicate the padded/non-padded regions. Such embodiments may use further technical step(s).

Method 2: Mapping the spatial resolution of the larger to the smaller source 2d array Another method is to map the spatial resolution of the larger source 2d array to the smaller source 2d array. The advantage of this method is processing and carriage of less than the original information; the disadvantage is information loss.

In primary embodiments, resampling may be applied to the larger source 2d array. In alternative embodiments, cropping may be applied to the larger source 2d array.

In such embodiments, additional metadata may be included to signal the resampling information or the cropping information for the larger source 2d array. The resampling information may comprise an indicator of the resampling operation, parameters of the resampling (e.g., downsampling factors, algorithms, etc.), and/or the original spatial resolution of the larger source 2d array, among others; the original spatial resolution of the larger source 2d array may be used to possibly imply resampling parameters (e.g., downsampling factors). The cropping information may comprise an indicator of the cropping operation, and/or which rows/columns are cropped, among others. Such embodiments may use further technical step(s).

Method 3: Mapping the spatial resolution of both source 2d arrays to a common spatial resolution

Another method is to map the spatial resolution of each source 2d array to a common spatial resolution that is different than both. The advantage of this method is the ability to select a desirable spatial resolution; the disadvantage is higher computational costs. That is, according to an embodiment, a method may comprise a step of aligning two or more arrays, wherein the aligning comprises mapping the first array having a first spatial resolution and the second array having a second spatial resolution to a third spatial resolution. The mapping may comprise one or more of applying resampling to the first array and to the second array; applying padding to the first array and to the second array; and applying cropping to the first array and to the second array.

In primary embodiments, resampling may be applied to both source 2d arrays. In alternative embodiments, padding may be applied to both source 2d arrays using an undefined sample value or a valid sample value plus spatial information, as described in previous methods, aligning them with a common spatial resolution that is larger than the larger source 2d array. In alternative embodiments, cropping may be applied to both source 2d arrays, aligning them with a common spatial resolution that is smaller than the smaller source 2d array. In alternative embodiments, combinations of resampling-padding, padding-resampling, resampling-cropping, cropping-resampling, padding-cropping, may be applied to the smaller-larger source 2d array, respectively, aligning them with any common spatial resolution.

When padding is applied using an undefined sample value to each source 2d array, each undefined sample value should be considered when determining the dictionary. An example is shown in Table 2.

Table 2 - Source 2d array sample values including undefined sample values, 2-tuples, and corresponding values.

| **Source 2d array sample values** | | **Dictionary** | |
|---|---|---|---|
| **X** | **Y** | **Key (2-tuple)** | **Value (value)** |
| 0 | 0 | (0, 0) | 14 |
| 0 | 1 | (0, 1) | 42 |
| 1 | 0 | (1, 0) | 70 |
| 1 | 1 | (1, 1) | 98 |
| u | 0 | (u, 0) | 126 |
| u | 1 | (u, 1) | 154 |
| 0 | u | (0, u) | 182 |
| 1 | u | (1, u) | 210 |
| u | u | (u, u) | 238 |

In such embodiments, additional metadata may be included to signal the resampling information, or the padding information, or the cropping information for each source 2d array. Such embodiments may use further technical step(s).

Note 4 Samples correspondence between source 2d arrays

The basic embodiment assumes that the correspondence between samples belonging to the source 2d arrays to be multiplexed is 1-1 based on the same location. In other embodiments, a different correspondence may be used. For example, a sample at location ($x_1$, $y_1$) in a first source 2d array may correspond to a sample at location ($x_2$, $y_2$) in a second source 2d array, with $x_1 \neq x_2$ and $y_1 \neq y_2$, in which case, the correspondence is not 1-1 based on the same location. In such embodiments, image processing operations may be applied, such as a samples re-arrangement function, to satisfy the 1-1 correspondence based on the same sample location. In such embodiments, additional metadata may be included to signal the samples re-arrangement information for each source 2d array. Such embodiments may use further technical step(s).

**Dictionary**

Note 5 Transformed dictionary

The basic embodiment assumes that the multiplexing information contains the dictionary and that the dictionary is transformed at the receiving device mapping the values to the n-tuples (i.e., swapping between keys and values), to be able to demultiplex the multiplexed 2d array to the source 2d arrays. In other embodiments, this transformation is performed at the capturing device and the transformed dictionary is instead included in the metadata. An example of a dictionary and a transformed dictionary is shown in Table 3. Such embodiments may use further technical step(s).

Table 3 - An example of a dictionary and a transformed dictionary, wherein the keys and values of the former are swapped in the latter.

| Dictionary | | Transformed dictionary | |
|---|---|---|---|
| **Key (2-tuple)** | **Value (value)** | **Key (value)** | **Value (2-tuple)** |
| (0, 0) | 31 | 31 | (0, 0) |
| (0, 1) | 95 | 95 | (0, 1) |
| (1, 0) | 159 | 159 | (1, 0) |
| (1, 1) | 223 | 223 | (1, 1) |

Note 6 Different associative arrays

The basic embodiment assumes that a dictionary is determined to map n-tuples to values. In other embodiments, another type of associative array may be used, such as a look-up table, map, symbol table, or any other data structure that can store a collection of key-value pairs. If the data structure supports bidirectional mappings between key-value pairs, only this data structure may be used without the need to swap the dictionary at the capturing or receiving device. Other data structures may include matrices or lists.

Note 7 Bitmask positions

The basic embodiment assumes that the dictionary is determined to map n-tuples to values that are as remote as possible between each other. In other embodiments, the values can be determined by bitmask positions. An example is shown in Table 4. In such embodiments, additional metadata may be included to signal the mapping between source 2d arrays and bitmask positions.

Table 4 - Source 2d array sample values, 2-tuples, and corresponding dictionary values.

| Source 2d array sample values | | Dictionary | |
|---|---|---|---|
| **X** | **Y** | **Key (2-tuple)** | **Value (value)** |
| 0 | 0 | (0, 0) | 0 (**00**000000) |
| 0 | 1 | (0,1) | 64 (**01**000000) |
| 1 | 0 | (1, 0) | 128 (**10**000000) |
| 1 | 1 | (1, 1) | 192 (**11**000000) |

Note 8 Pre-determined dictionary

The basic embodiment assumes that the dictionary is contained in the multiplexing information that is sent to the receiving device. In other embodiments, the dictionary could be pre-determined by conventions of the application, by a certain standard, etc. In such embodiments, the dictionary could be excluded from the transmitted multiplexing information. However, related metadata may comprise, as an alternative or in addition to the association information such as the dictionary, one or more of:

- A number of source 2d arrays (at least 2 but can be more) contained in the multiplexed 2d array, e.g., as described for the parameter cf mi_num_auxiliary_pictures;
- a type of each source 2d array, e.g., as described for the parameter mi_auxiliary_picture_type_id;
- a bit depth of each source 2d array, e.g., as described for the parameter mi_auxiliary_picture_bit_depth; and
- information such as a resampling info, a spatial alignment, and the like.

## Encoding

Note 9 Lossy encoding

The basic embodiment assumes lossless compression and, thus, no errors in the decoded multiplexed 2d array sample values. In other embodiments, lossy compression may be used. In such embodiments, different methods may be used to mitigate reconstruction errors. Below, exemplary methods are presented.

Method 1: Map a range of values to the same n-tuple

One method is to map a range of neighboring values to the same n-tuple, and include these additional mappings in the transformed dictionary (e.g., assuming two 1-bit source 2d arrays with dictionary: {((0, 0), 31), ((0, 1), 95), ((1, 0), 159), ((1, 1), 223)}, the transformed dictionary may be: {(31+i, (0, 0)), (95+i, (0, .1)), (159+i, (1, 0)), (223+i, (1, 1))}, with -31 <= i <= 32).. The range assigned to each value could be uniform or non-uniform based on the importance of each value, or more than one ranges could be assigned to the same value. Possibly, the ranges could be non-continuous. More suitable data structures than dictionaries could be employed to signal such associations.

Method 2: Reconstruct values from decoded multiplexed 2d array values

Another method is to introduce additional logic at the receiving device, to reconstruct values from the decoded multiplexed 2d array sample values. For example, at the capturing device, the values may be obtained by dividing the encoding range (i.e., 0-255 for 8-bit encoding) to non-overlapping, equal-sized intervals, and selecting the centroid of each interval (e.g., assuming two 1-bit source 2d arrays, the dictionary may be: {((0, 0), 31), ((0, 1), 95), ((1, 0), 159), ((1, 1), 223)}). During reconstruction, each decoded multiplexed 2d array sample value could be mapped to its closest value, as retrieved from the dictionary (i.e., 31, 95, 159 or 223 using the above dictionary). Such embodiments may use further technical step(s).

Note 10 Unencoded multiplexed 2d array

The basic embodiment assumes that the multiplexed 2d array is encoded. In other embodiments, the encoding could be omitted.

## Auxiliary pictures associated with primary pictures

Note 11 Source 2d arrays as auxiliary pictures

The basic embodiment assumes that the source 2d arrays contain the sample values of auxiliary pictures that are not associated with a primary picture. In other embodiments, the auxiliary pictures may be associated with a primary picture. In such embodiments, the multiplexed 2d array obtained after multiplexing the source 2d arrays should be associated with the primary picture. In such embodiments, additional metadata may be included to signal this association. Such embodiments may use further technical step(s).

Note 12 Source 2d arrays as auxiliary pictures and spatial alignment with primary picture As described in note 11, in some embodiments, the source 2d arrays may contain the sample values of auxiliary pictures that are associated with a primary picture. Spatial resolution alignment between the multiplexed 2d array and the primary picture may or may not be

required. If spatial resolution alignment is not required, existing signalling may be used (e.g., width and height) to indicate their relationship. If alignment is required and is not satisfied already, image processing operations may be applied to the multiplexed 2d array, such as resampling, padding, or cropping, as described in note 3. In such embodiments, additional metadata may be included to signal the resampling information or the padding information or the cropping information for the multiplexed 2d array. Such embodiments may use further technical step(s).

As a remark, the spatial resolutions of the multiplexed 2d array and the primary picture may be already aligned, if (a) the spatial resolutions of all source 2d arrays are the same as the spatial resolution of the primary picture, (b) the spatial resolution of at least one source 2d array is the same as the spatial resolution of the primary picture and the spatial resolution of the remaining source 2d arrays is mapped to the latter, before generating the multiplexed 2d array in technical step 4, or (c) the spatial resolution of none of the source 2d arrays is the same as the spatial resolution of the primary picture and the spatial resolutions of all source 2d arrays are mapped to a common spatial resolution that is equal to the spatial resolution of the primary picture, before generating the multiplexed 2d array in technical step 4.

Note 13 Source 2d arrays as auxiliary pictures and spatial origins within primary picture As described in note 11, in some embodiments, the source 2d arrays may contain the sample values of auxiliary pictures that are associated with a primary picture. In further embodiments, the spatial origins of the source 2d arrays within the primary picture may not be the same as the spatial origin of the primary picture. In such embodiments, the spatial origins of the source 2d arrays within the primary picture may be used to align their spatial resolutions before generating the multiplexed 2d array in technical step 4. To perform this alignment under different spatial origins, different methods may be used. Below, exemplary methods are presented.

Method 1: Maintain the difference in spatial origins

One method is to maintain the difference in the spatial origins of the source 2d arrays within the primary picture, and apply image processing operations to align their spatial resolutions. The advantage of this method is content alignment across source 2d arrays; the disadvantage is processing and carriage of more than the original information.

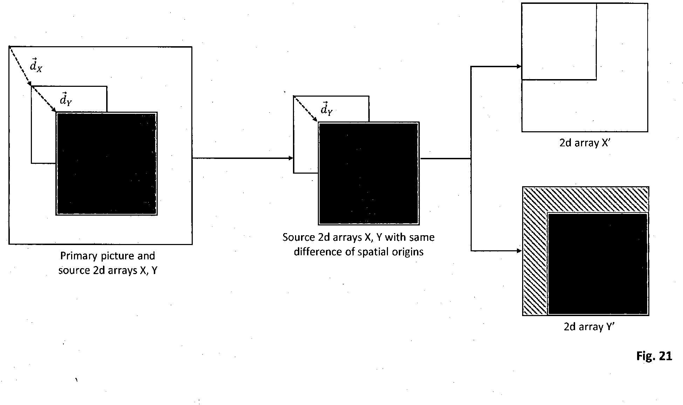

In primary embodiments, padding may be applied to both source 2d arrays using undefined sample values or valid sample values plus spatial information, as described in note 3, aligning them to a common spatial resolution that contains the spatial resolutions of both source 2d arrays. An example is shown in Fig. 21.

In Fig. 21, an example of a primary picture and source 2d arrays X, Y is shown, wherein the spatial origins of the source 2d arrays are different than the spatial origin of the primary picture, indicated by the offset vectors $\vec{d}_X$ and $\vec{d}_Y$. In this example, the difference in the spatial origins of the source 2d arrays $\vec{d}_Y$ is maintained. The source 2d arrays X and Y are padded, and the 2d arrays X' and Y' are obtained, respectively, which are used to generate the mutliplexed 2d array.

In alternative embodiments, other image processing operations such as resampling and/or cropping may be applied to the source 2d arrays, aligning them to a common spatial resolution. However, advantages related to content alignment between the source 2d arrays and no information loss achieved when using padding, may not be preserved.

In such embodiments, additional metadata may be included to signal the resampling information, or the padding information, or the cropping information for each source 2d array. Such embodiments may use further technical step(s). Existing signalling that indicates the offset between the spatial origins of the multiplexed 2d array and the primary picture may be used (e.g., H.265/HEVC offsets).

Method 2: Shift the spatial origins

Another method is to shift the spatial origins of at least one source 2d array within the primary picture to match them to a common origin, and then apply image processing operations to align their spatial resolutions. The advantage of this method is processing and carriage of less samples (i.e., memory, computations, encoding, storage); the disadvantage is content misalignment across source 2d arrays.

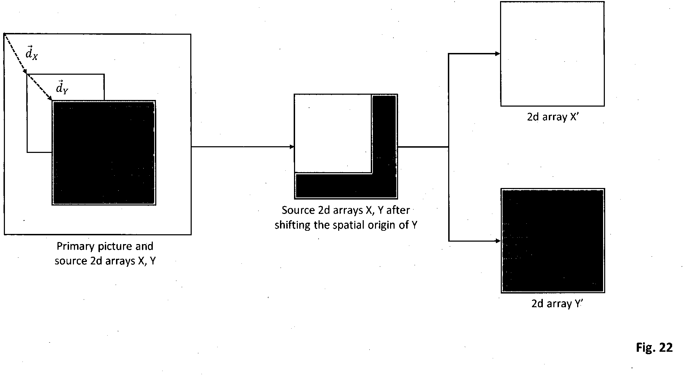

In primary embodiments, after shifting the spatial origins, resampling may be applied to the smaller source 2d array, as described in note 3. An example is shown in Fig. 22.

In Fig. 22, an example of a primary picture and source 2d arrays X, Y is shown, wherein the spatial origins of the source 2d arrays are different than the spatial origin of the primary picture, indicated by the offset vectors $\vec{d}_X$ and $\vec{d}_Y$. In this example, the spatial origin of the source 2d array Y is shifted to match the spatial origin of the source 2d array X. The source 2d arrays X and Y are resampled, and the 2d arrays X' and Y' are obtained, respectively, which are used to generate the mutliplexed 2d array.

In this example, the spatial origins of the source 2d arrays are considered to be the top-left corners. In other examples, the spatial origins may be determined differently based on a different convention (e.g., top-right, bottom-left, bottom-right, etc).

In alternative embodiments, other methods and variants described in note 3 may be used to align the spatial resolutions of the source 2d arrays, after matching their spatial origins.

In such embodiments, additional metadata may be included to signal the resampling information, or the padding information, or the cropping information for the source 2d arrays. Additional metadata may also be included to signal the offset information of the spatial origins of the source 2d arrays within the primary picture. The offset information may comprise vertical and horizontal offsets of the spatial origin of each source 2d array relative to the spatial origin of the primary picture; or a source 2d array may be considered as a reference source 2d array wherein vertical and horizontal offsets of the spatial origin of this reference may be determined relative to the spatial origin of the primary picture while vertical and horizontal offsets of the spatial origins of the remaining source 2d arrays may be determined relative to the spatial origin of this reference; or vertical and horizontal offsets of the spatial origin of each source 2d array may be determined relative to the spatial origin of a previous source 2d array following a specific order, with the vertical and horizontal offsets of the spatial origin of the first source 2d array in this order determined relative to the primary picture. The offset information may additionally comprise the origin location or an indicator of it (e.g., top-left, top-right, etc.). Such embodiments may use further technical step(s).

**Video / Sequence of source 2d arrays**

Note 14 Temporal alignment between sequences of source 2d arrays

The basic embodiment assumes static source 2d arrays. In other embodiments, sequences of source 2d arrays may be used. In such embodiments, the sequences of source 2d arrays may be temporally aligned, or not. In the former case, the provided technical steps may be used for each source 2d array of the sequence without further adjustments. In the latter case, adjustments may be required, to indicate at every given time instance the source 2d arrays to be multiplexed and the applicable dictionary, before generating the multiplexed 2d array in technical step 4.

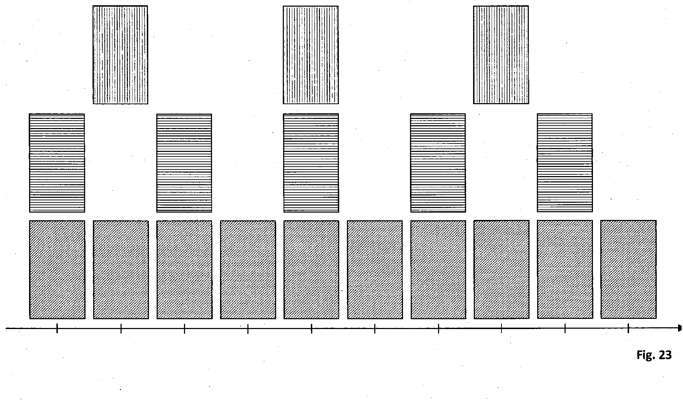

In case of partial temporal alignment, the sequences of source 2d arrays are not temporally aligned but do have an overlap in their timeline, as shown in Fig. 23. Below, exemplary methods are presented.

In Fig. 23, sequences of source 2d arrays X (diagonally hatched), Y (horizontally hatched), and Z (vertically hatched) that are not temporally aligned but do have an overlap in their timeline.

One method is to apply padding to entire source 2d arrays that are not present at a given time instance using undefined sample values or valid sample values plus spatial information, as described in note 3. In the latter case, the spatial information may be reduced to an indicator specifying whether a source 2d array is entirely padded or not.

For example, an undefined sample value may be defined per sequence of source 2d arrays, and assigned to all the samples of a source 2d array, when is not present at a given time instance. Or, valid sample values of a sequence of source 2d arrays of a previous source 2d array may be used for padding the current source 2d array, when is not present at a given time instance.

In such embodiments, additional metadata may be included to signal padding information, and identifiers of the padded and/or non-padded source 2d arrays contained in a multiplexed 2d array at a given time instance. Such embodiments may use further technical step(s).

Another method is to determine a dictionary comprising n-tuples based on all possible combinations of sample values from sequences of source 2d arrays that have an overlap in their timeline. An example is presented in the Table 5.

Table 5 - Source 2d array sample values, 3-tuples with "-" indicating absence of source 2d array, and corresponding values.

| Source 2d array sample values | | | Dictionary | |
|---|---|---|---|---|
| X | Y | Z | Key (3-tuple) | Value (value) |
| 0 | 0 | 0 | (0, 0, 0) | 9 |
| 0 | 0 | 1 | (0,0,1) | 23 |
| 0 | 1 | 0 | (0, 1, 0) | 37 |
| 0 | 1 | 1 | (0, 1, 1) | 51 |
| 1 | 0 | 0 | (1, 0, 0) | 65 |
| 1 | 0 | 1 | (1, 0, 1) | 79 |
| 1 | 1 | 0 | (1, 1, 0) | 93 |
| 1 | 1 | 1 | (1, 1, 1) | 107 |
| 0 | 0 | - | (0, 0, -) | 121 |
| 0 | 1 | - | (0, 0, -) | 135 |

(continued)

| Source 2d array sample values | | | Dictionary | |
|---|---|---|---|---|
| X | Y | Z | Key (3-tuple) | Value (value) |
| 1 | 0 | - | (0, 1, -) | 149 |
| 1 | 1 | - | (0, 1, -) | 163 |
| 0 | - | 0 | (0, -, 0) | 177 |
| 0 | - | 1 | (0, -, 1) | 191 |
| 1 | - | 0 | (1, -, 0) | 205 |
| 1 | - | 1 | (1, -, 1) | 219 |
| 0 | - | - | (0, -, -) | 233 |
| 1 | - | - | (1, -, -) | 247 |

In such embodiments, additional metadata may be included to signal the dictionary, and/or indicators specifying the source 2d arrays that are present in a multiplexed 2d array at a given time instance.

Another method is to determine different (sub-)dictionaries, one for each set of sequences of source 2d arrays that have an overlap in their timeline, and to signal either an indicator of the (sub-)dictionary, or the (sub-)dictionary to be used with a multiplexed 2d array at a given time instance. To improve compression efficiency, the different (sub-) dictionaries may use the same values. An example is presented in Table 6.

Table 6 - Source 2d array sample values, dictionaries determined by ids, n-tuples, and corresponding values determined per dictionary.

| Source 2d array sample values | | | Dictionary | | |
|---|---|---|---|---|---|
| X | Y | Z | Id | Key (n-tuple) | Value (value) |
| 0 | 0 | 0 | 0 | (0, 0, 0) | 15 |
| 0 | 0 | 1 | 0 | (0, 0, 1) | 47 |
| 0 | 1 | 0 | 0 | (0, 1, 0) | 79 |
| 0 | 1 | 1 | 0 | (0, 1, 1) | 111 |
| 1 | 0 | 0 | 0 | (1, 0, 0) | 143 |
| 1 | 0 | 1 | 0 | (1, 0, 1) | 175 |
| 1 | 1 | 0 | 0 | (1, 1, 0) | 207 |
| 1 | 1 | 1 | 0 | (1, 1, 1) | 239 |
| 0 | 0 | - | 1 | (0, 0) | 15 |
| 0 | 1 | - | 1 | (0, 1) | 79 |
| 1 | 0 | - | 1 | (1, 0) | 143 |
| 1 | 1 | - | 1 | (1, 1) | 207 |
| 0 | - | 0 | 2 | (0, 0) | 15 |
| 0 | - | 1 | 2 | (0, 1) | 79 |
| 1 | - | 0 | 2 | (1, 0) | 143 |
| 1 | - | 1 | 2 | (1, 1) | 207 |
| 0 | - | - | 3 | (0) | 47 |
| 1 | - | - | 3 | (1) | 175 |

In such embodiments, additional metadata may be included to signal the different dictionaries, possibly an indicator of the dictionary to be used, and/or indicators specifying the source 2d arrays that are present in a multiplexed 2d array at a given time instance.

Another method is to signal a pattern that describes the overlap the sequences of source 2d arrays have in their timeline.

Note 15 Temporally varying spatial origins

In other embodiments, the sequences of source 2d arrays may contain the sample values of auxiliary videos that are associated with a primary video, and the spatial origins of the source 2d arrays within the primary video frames may vary across time. In such embodiments, the offset information may be updated in every change of a spatial origin, and/or the vertical and horizontal offsets of the spatial origin of each source 2d array may be determined relative to the spatial origin of the previous source 2d array that belongs to the same sequence of source 2d arrays. The offset information may additionally comprise the origin location or an indicator of it (e.g., top-left, top-right, etc.). Such embodiments may use further technical step(s).

## Metadata

Note 16 Explicit or implicit signalling of the number of source 2d arrays

The basic embodiment assumes that the number of source 2d arrays is pre-determined. In other embodiments, the number of source 2d arrays may be implied. For example, the number of source 2d arrays may be retrieved by the number of elements of the n-tuple (i.e., n). In some other embodiments, the number of source 2d arrays may be explicitly provided. In such embodiments, additional metadata may be included to signal the number of source 2d arrays.

Note 17 Source 2d arrays carrying metadata

The basic embodiment assumes that the source 2d arrays are not associated with any metadata. In other embodiments, each source 2d array may be associated with its own metadata. In such embodiments, additional metadata may be included to signal the metadata of each source 2d array.

## Transmission

Note 18 Encapsulated data

After encoding, the multiplexed 2d array may be encapsulated together with the generated metadata. The encapsulation may be performed either in the video bitstream or in the file format level which contains the video bitstream (e.g. in a file based on or derived from the ISOBMFF standard). The encapsulated data could be transmitted over the network either as a stream (after establishing a session) or as a file (potentially in parts), or may be stored in the device as a file.

## Post-processing

Note 19 Post-processing of auxiliary composite picture

The basic embodiment assumes that no processing is applied to the multiplexed 2d array. In other embodiments, further processing could be applied. For example, image processing operations (e.g., resampling, cropping) could be used to reduce bitrate. In such embodiments, additional metadata may be included to signal the post-processing information of the multiplexed 2d array. Such embodiments may use further technical step(s).

## Embodiments

The disclosure provisions several signalling methods:

1. As metadata in video bitstream;
2. As metadata in a file format containing the video bitstream.

For video bitstream, the metadata are signalled using new Supplemental Enhancement Information (SEI) messages using auxiliary pictures. For file format, the metadata are signalled using new structures in the ISO Base Media File Format (ISOBMFF) [14][14]. These are examples of video bitstream and file format signalling that rely on referenced standards; however, other standards could be used as basis for implementing this invention.

The following assumptions are made:

- Our embodiments consider that each multiplexed 2d array is encoded as a conventional video frame. Therefore, only

the associated metadata to reconstruct the source 2d arrays from the multiplexed 2d array are considered.
- Our embodiments assume 1-1 spatial association between each source 2d array and the multiplexed 2d array.

The preferred embodiment is using auxiliary pictures, presented in section "Carriage of multiplexed picture using an auxiliary picture" .

**Signalling in video stream**

For the purpose of the invention, the multiplexing information may need to be transmitted along with the video signal from the encoding step (e.g. in a studio, on a server) up to the receiver (e.g. the TV receiver, a smartphone, a tablet, a HMD glasses, etc.). Therefore, they may be signalled as part of the video bitstream's metadata.

For illustrating the transport of the information, the following is an example based on the NAL-based video coding standards which are currently H.264/AVC [10][10], H.265/HEVC [11], MPEG-5 EVC [16] and H.266/VVC [12][12]. But similar signalling could be achieved for other coding standards such as AV1 [17] or the upcoming AV2 standard.

A Network Abstraction Layer (NAL) unit is the encapsulation method for a video bitstream. A NAL unit is composed of a header and a payload. The concept of NAL unit is identical for those 4 standards although the definition of the NAL header may vary slightly between H.264/AVC [10][10], H.265/HEVC [11], MPEG-5 EVC [16] and H.266/VVC [12].

For the remaining of this section, the signalling will take the H.266/VVC [12] standard as a basis for illustration purposes. Similar embodiments can be designed for H.264/AVC [10][10], H.265/HEVC [11], or MPEG-5 EVC [16].

Table 7 is the general syntax of a NAL unit as defined in H.266/VVC [12]. The formatting of those tables follows the conventions defined in H.266/VVC [12]. Please refer to section 7.1 (Method of specifying syntax in tabular form) and section 7.2 (Specification of syntax functions and descriptors) in H.266/VVC [12].

Table 7 - General NAL unit syntax as defined in H.266/VVC [12].

| *nal unit(NumBytesInNalUnit) {* | ***Descriptor*** |
|---|---|
| *nal_unit_header( )* | |
| *NumBytesInRbsp = 0* | |
| *for( i = 2; i < NumBytesInNalUnit; i++ )* | |
| *if( i + 2 < NumBytesInNalUnit && next_bits(24) = = 0x000003 ) {* | |
| ***rbsp_byte**[ NumBytesInRbsp++ ]* | *b(8)* |
| ***rbsp_byte**[ NumBytesInRbsp++ ]* | *b(8)* |
| *i += 2* | |
| ***emulation_prevention_three_byte** /* equal to 0x03 */* | *f(8)* |
| *} else* | |
| ***rbsp_byte**[ NumBytesInRbsp++ ]* | *b(8)* |
| *}* | |

The signalling consists in defining a new type of Supplemental Enhancement Information (SEI) message. SEI are metadata carried in a video bitstream of H.264/AVC [10][10], H.265/HEVC [11], MPEG-5 EVC [16] or H.266/VVC [12] that can assist in the decoding of the video (e.g., buffering period SEI) or more often enable some processing after decoding (e.g., colour remapping SEI). Each SEI type defines the syntax of the payload as well as the semantic of the data so that the implementor can make use of the signalled SEI if they want to support it. A SEI message is carried in the video bitstream as a NAL unit and the type of SEI is expressed by a payload type. In H.266/VVC [12], the payload types are defined in section D.2.1 (General SEI payload syntax). For signalling the multiplexing information, one may thus define a new payload type, e.g. payload type '134' as part of the current reserved range of values as in Table 8.

Table 8 - Modification of general SEI payload syntax in H.266/VVC [12].

| *sei_payload( payloadType, payloadSize ) {* | ***Descriptor*** |
|---|---|
| *if( nal_unit_type = = PREFIX_SEI_NUT)* | |
| *if( payloadType = = 0 )* | |
| *buffering_period( payloadSize )* | |

(continued)

| | |
|---|---|
| *else if( payloadType = = 1 )* | |
| *pic_timing( payloadSize )* | |
| ... | |
| *else if(payloadType = = 133 )* | |
| *scalable_nesting( payloadSize )* | |
| else if( payloadType = = 134 ) | |
| multiplexing_info( payloadSize ) | |
| *else /* Specified in Rec. ITU-T H.274 \| ISO/IEC 23002-7 */* | |
| *reserved_message( payloadSize )* | |
| ... | |
| *}* | |

***Carriage of multiplexing information using a SEI message***

One method to carry the multiplexing information is to use SEI messages. In this first case, we assume single-layer bitstream method which means that only the multiplexed pictures are transported in the video bitstream and not the primary pictures.

In this method, new SEI messages that specify metadata are defined.

In the present case, the sequence of multiplexed pictures may be encoded as a conventional video, and the multiplexing information is carried in one or more SEI messages.

The following embodiments present examples of such SEI messages. Other embodiments could be crafted following the same logic.

**Embodiment 1**

In this case, a SEI message carries the multiplexing information which comprises the number of auxiliary pictures, the type and the bit depth of each auxiliary picture, and the dictionary. The resolutions of all auxiliary pictures is the same to the multiplexed picture, hence, the Sequence Parameter Set (SPS) signalling for the multiplexed picture is used to specify the width and height parameters of each auxiliary picture.

Syntax related to embodiment 1 of Carriage of multiplexing information using a SEI message A new payload type may be defined as in Table 9.

Table 9 - Signalling of the number of auxiliary pictures, the type and the bit depth of each auxiliary picture, and the dictionary in a SEI message.

| multiplexing_info( payloadSize ) { | **Descriptor** |
|---|---|
| **mi_cancel_flag** | u(1) |
| if( ! mi_cancel_flag) { | |
| **mi_num_auxiliary_pictures** | u(8) |
| for( i = 0; i < mi_num_auxiliary_pictures; i++ ) { | |
| **mi_auxiliary_picture_type_id**[ i ] | u(8) |
| **mi_auxiliary_picture_bit_depth**[ i ] | u(4) |
| } | |
| **mi_num_multiplexed_picture_sample_values** | u(16) |
| for( j = 0; j < mi_num_multiplexed_picture_sample_values; j++ ) { | |
| **mi_multiplexed_picture_sample_value**[ j ][ 0 ] | u(16) |
| for( k = 1; k <= mi_num_auxiliary_pictures; k++ ) | |
| **mi_auxiliary_picture_sample_value**[ j ][ k ] | u(8) |

(continued)

| | |
|---|---|
| } | |
| } | |
| } | |

Semantics related to embodiment 1 of Carriage of multiplexing information using a SEI message The multiplexing_info SEI message provides information that describes the number of auxiliary pictures, the type and the bit depth of each auxiliary picture, and the dictionary, in the video bitstream. The multiplexing_info SEI message is defined up to a frame.

**mi_cancel_flag** equal to 1 indicates that the SEI message cancels the persistence of any previous multiplexing_info SEI message. When equal to 0, the information that should be considered follows.

**mi_num_auxiliary_pictures** specifies the number of the auxiliary pictures contained in the multiplexed picture.

**mi_auxiliary_picture_type_id** [ i ] specifies the identifier of the type of the i-th auxiliary picture, as specified in Table 10.

Table 10 - Mapping of mi_auxiliary_picture_type_id [ i ] to the type of auxiliary pictures.

| **mi_auxiliary_pict ure_type_id [ i ]** | **Type** |
|---|---|
| 0 | Image segmentation mask |
| 1 | Region of interest mask |
| 2 | Transparency mask |
| 3 | Confidence mask |
| 4 | Occupancy mask |
| 5 | Occlusion mask |
| 6...255 | Reserved |

mi_auxiliary_picture_type_id[ i ] shall be in the range of 0 to 5, inclusive, with larger values reserved for future usage.

**mi_auxiliary_picture_bit_depth**[ i ] specifies the bit depth of the i-th auxiliary picture.

**mi_num_multiplexed_picture_sample_values** specifies the number of the multiplexed picture sample values.

**mi_multiplexed_picture_sample_value**[ j ][ 0 ] specifies the j-th multiplexed picture sample value.

**mi_auxiliary_picture_sample_value**[ j ][ k ] specifies the auxiliary picture sample value of the k-th auxiliary picture that corresponds to the j-th multiplexed picture sample value (i.e., mi_multiplexed_picture_sample_value[ j ][ 0 ]).

**Embodiment 2**

In this case, a SEI message carries the multiplexing information which comprises the number of auxiliary pictures, the type, bit depth, width and height of each auxiliary picture, whether each auxiliary picture is spatially aligned and related parameters if spatial alignment is applied, and the dictionary.

Syntax related to embodiment 2 of Carriage of multiplexing information using a SEI message A new payload type may be defined as in

Table 11.

Table 11 - Signalling of the number of auxiliary pictures, the type bit depth, width and height of each auxiliary picture, whether each auxiliary picture is spatially aligned and related parameters if spatial alignment is applied, and the dictionary in a SEI message.

| multiplexing_info( payloadSize ) { | **Descriptor** |
|---|---|
| **mi_cancel_flag** | u(1) |

(continued)

| if( ! mi_cancel_flag) { | |
|---|---|
| **mi_num_auxiliary_pictures** | u(8) |
| for( i = 0; i < mi_num_auxiliary_pictures; i++ ) { | |
| **mi_auxiliary_picture_type_id**[ i ] | u(8) |
| **mi_auxiliary_picture_bit_depth**[ i ] | u(4) |
| **mi_auxiliary_picture_width**[ i ] | u(12) |
| **mi_auxiliary_picture_height**[ i ] | u(12) |
| **mi_is_spatially_aligned**[ i ] | u(1) |
| if( mi_is_spatially_aligned[ i ] == 0 ) { | |
| **mi_spatial_alignment_type_id**[ i ] | u(4) |
| if( mi_spatial_alignment_type_id[ i ] == 0 ) | |
| **mi_resampling_algorithm_id**[ i ] | u(4) |
| if( mi_spatial_alignment_type_id[ i ] == 1 ) | |
| **mi_undefined_sample_value_spatial**[ i ] | u(9) |
| if( mi_spatial_alignment_type_id[ i ] == 1 \| \| mi_spatial_alignment_type_id[ i ] == 2 ) { | |
| **mi_start_column**[ i ] | u(12) |
| **mi_end_column**[ i ] | u(12) |
| **mi_start_row**[ i ] | u(12) |
| **mi_end_row**[ i ] | u(12) |
| } | |
| } | |
| } | |
| **mi_num_multiplexed_picture_sample_values** | u(16) |
| for( j = 0; j < mi_num_multiplexed_picture_sample_values; j++ ) { | |
| **mi_multiplexed_picture_sample_value**[ j ][ 0 ] | u(16) |
| for( k = 1; k <= mi_num_auxiliary_pictures; k++ ) | |
| **mi_auxiliary_picture_sample_value**[ j ][ k ] | u(8) |
| } | |
| } | |
| } | |

Semantics related to embodiment 2 of Carriage of multiplexing information using a SEI message The multiplexing_info SEI message provides information that describes the number of auxiliary pictures, the type, bit depth, width and height of each auxiliary picture, whether each auxiliary picture is spatially aligned and related parameters if spatial alignment is applied. The dictionary_info SEI message provides information that describes the dictionary. All SEI messages are defined up to a frame.

**mi_auxiliary_picture_width**[ i ] specifies the width of the i-th auxiliary picture.

**mi_auxiliary_picture_height**[ i ] specifies the height of the i-th auxiliary picture.

**mi_is_spatially_aligned**[ i ] specifies whether the i-th auxiliary picture is spatially aligned. When equal to 0, processing to spatially align the i-the auxiliary picture is applied. When equal to 1, the i-th auxiliary picture is spatially aligned.

**mi_spatial_alignment_type_id**[ i ] specifies an identifier of the type of spatial alignment applied to the i-th auxiliary picture. When equal to 0, resampling is used. When equal to 1, padding with undefined sample values is used.

When equal to 2, padding with valid sample values is used. Larger values are reserved for future usage.

**mi_resampling_algorithm_id**[ i ] specifies an identifier of the algorithm used for resampling the i-th auxiliary picture, as specified in Table 12.

Table 12 - Mapping of mi_resampling_algorithm_id[ i ] to the resampling algorithm.

| mi_resampling_al gorithm_id[ i ] | Type |
|---|---|
| 0 | Bilinear interpolation |
| 1 | Bicubic interpolation |
| 2 | Nearest neighbor |
| 3 | Averaging area |
| 4...16 | Reserved |

When not specified, the mi_auxiliary_picture_resampling_algorithm_id[ k ] is set equal to 0. The resampling factors of width and height for the i-th auxiliary picture are obtained by dividing the multiplexed picture width by the mi_auxiliary_picture_width[ i ], and the multiplexed picture height by the mi_auxiliary_picture_height[ i ] (i.e., the multiplexed picture width and height are obtained from the SPS signalling).

**mi_undefined_sample_value_spatial**[ i ] specifies the value used to indicate the undefined sample value for the i-th auxiliary picture. When not specified, the mi_undefined_sample_value_spatial[ i ] is set equal to (1 << mi_auxiliary_picture_bit_depth[ i ]).

This value could be selected to belong between the minimum and the maximum values defined by the bit depth of the auxiliary picture (i.e., between 0 and 255 for 8 bit depth auxiliary picture), or it could be selected to be outside of this range (e.g., 256).

**mi_start_column**[ i ] specifies the column of the multiplexed picture that corresponds to the first column of the i-th auxiliary picture. When mi_spatial_alignment_type_id[ i ] is equal to 1 and mi_start_column[ i ] is not specified, it is obtained as the first column of the multiplexed picture in ascending order, where at least one sample value of this column is not undefined. When mi_spatial_alignment_type_id[ i ] is equal to 2, the mi_start_column[ i ] shall be specified.

**mi_end_column**[ i ] specifies the column of the multiplexed picture that corresponds to the last column of the i-th auxiliary picture. When mi_spatial_alignment_type_id[ i ] is equal to 1 and mi_end_column[ i ] is not specified, it is obtained as mi_start_column[ i ] + mi_auxiliary_picture_width[ i ] - 1. When mi_spatial_alignment_type_id[ i ] is equal to 2, the mi_end_column[ i ] shall be specified.

**mi_start_row**[ i ] specifies the row of the multiplexed picture that corresponds to the first row of the i-th auxiliary picture. When mi_spatial_alignment_type_id[ i ] is equal to 1 and mi_start_row[ i ] is not specified, it is obtained as the first row of the multiplexed picture in ascending order, where at least one sample value of this row is not undefined. When mi_spatial_alignment_type_id[ i ] is equal to 2, mi_start_row[ i ] shall be specified.

**mi_end_row**[ k ] specifies the row of the multiplexed picture that corresponds to the last row of the i-th auxiliary picture. When mi_spatial_alignment_type_id[ i ] is equal to 1 and mi_end_row[ i ] is not specified, it is obtained as mi_start_row[ i ] + mi_auxiliary_picture_height[ i ] - 1. When mi_alignment_type_id[ i ] is equal to 2, mi_end_row[ i ] shall be specified.

The rest of the semantics can be found in section Semantics related to embodiment 1 of Carriage of multiplexing information using a SEI message 0.

## Embodiment 3

In this case, a first SEI message carries the multiplexing information which comprises the number of auxiliary pictures, the type, bit depth, width and height of each auxiliary picture, whether each auxiliary picture is spatially aligned and related parameters if spatial alignment is applied. A second SEI message carries the dictionary information which comprises the dictionary. A third SEI message carries the temporal information which comprises whether each auxiliary picture is temporally aligned and related parameters if temporal alignment is applied. This way, in case for example parameters specified in one SEI message are updated, only the corresponding SEI message can be sent, reducing the overhead.

Syntax related to embodiment 3 of Carriage of multiplexing information using a SEI message A new payload type may be defined as in Table 13, Table 14, and Table 15.

Table 13 - Signalling of the number of auxiliary pictures, the type bit depth, width and height of each auxiliary picture, whether each auxiliary picture is spatially aligned and related parameters if spatial alignment is applied in a SEI message.

| multiplexing_info( payloadSize ) { | **Descriptor** |
|---|---|
| **mi_cancel_flag** | u(1) |
| if( ! mi_cancel_flag) { | |
| **mi_num_auxiliary_pictures** | u(8) |
| for( i = 0; i < mi_num_auxiliary_pictures; i++ ) { | |
| **mi_auxiliary_picture_type_id**[ i ] | u(8) |
| **mi_auxiliary_picture_bit_depth**[ i ] | u(4) |
| **mi_auxiliary_picture_width**[ i ] | u(12) |
| **mi_auxiliary_picture_height**[ i ] | u(12) |
| **mi_is_spatially_aligned**[ i ] | u(1) |
| if( mi_is_spatially_aligned[ i ] == 0 ) { | |
| **mi_spatial_alignment_type_id**[ i ] | u(4) |
| if( mi_spatial_alignment_type_id[ i ] == 0 ) | |
| **mi_resampling_algorithm_id**[ i ] | u(4) |
| if( mi_spatial_alignment_type_id[ i ] == 1 ) | |
| **mi_undefined_sample_value_spatial**[ i ] | u(9) |
| if( mi_spatial_alignment_type_id[ i ] == 1 \| \| mi_spatial_alignment_type_id[ i ] == 2 ) { | |
| **mi_start_column**[ i ] | u(12) |
| **mi_end_column**[ i ] | u(12) |
| **mi_start_row**[ i ] | u(12) |
| **mi_end_row**[ i ] | u(12) |
| } | |
| } | |
| } | |
| } | |
| } | |

Table 14 - Signalling of the dictionary in a SEI message.

| dictionary_info( payloadSize ) { | **Descriptor** |
|---|---|
| **di_cancel_flag** | u(1) |
| if( ! di_cancel_flag) { | |
| **di_num_multiplexed_picture_sample_values** | u(16) |
| for( j = 0; j < di_num_multiplexed_picture_sample_values; j++ ) { | |
| **di_multiplexed_picture_sample_value**[ j ][ 0 ] | u(16) |
| for( k = 1; k <= mi_num_auxiliary_pictures; k++ ) | |
| **di_auxiliary_picture_sample_value**[ j ][ k ] | u(8) |
| } | |
| } | |

(continued)

| | |
|---|---|
| } | |

Table 15 - Signalling of the whether each auxiliary picture is temporally aligned and related parameters if temporal alignment is applied in a SEI message.

| temporal_info( payloadSize ) { | **Descriptor** |
|---|---|
| **ti_cancel_flag** | u(1) |
| if( ! ti_cancel_flag) { | |
| for( i = 0; i < mi_num_auxiliary_pictures; i++ ) { | |
| **ti_is_temporally_aligned**[ i ] | u(1) |
| if( ti_is_temporally_aligned[ i ] == 0 ) { | |
| **ti_temporal_alignment_type_id**[ i ] | u(4) |
| if( ti_temporal_alignment_type_id[ i ] == 1 ) | |
| **ti_undefined_sample_value_temporal**[ i ] | u(9) |
| } | |
| } | |
| } | |
| } | |

Semantics related to embodiment 3 of Carriage of multiplexing information using a SEI message The multiplexing_info SEI message provides information that describes the number of auxiliary pictures, the type, bit depth, width and height of each auxiliary picture, whether each auxiliary picture is spatially aligned and related parameters if spatial alignment is applied. The dictionary_info SEI message provides information that describes the dictionary. The temporal_info SEI message provides information that describes whether each auxiliary picture is temporally aligned and related parameters if temporal alignment is applied. All SEI messages are defined up to a frame.

**ti_cancel_flag** equal to 1 indicates that the SEI message cancels the persistence of any previous temporal_info SEI message. When equal to 0, the information that should be considered follows.

**ti_is_temporally_aligned**[ i ] specifies whether the i-th auxiliary picture is temporally aligned. When equal to 0, processing to temporally align the i-the auxiliary picture is applied. When equal to 1, the i-th auxiliary picture is temporally aligned.

**ti_temporal_alignment_type_id**[ i ] specifies an identifier of the type of temporal alignment applied to the i-th auxiliary picture. When equal to 0, padding with undefined sample values is used. When equal to 1, padding with valid sample values is used. Larger values are reserved for future usage. In both cases, the sample values of the i-th auxiliary picture are non-meanginful.

**ti_undefined_sample_value_temporal**[ i ] specifies the value used to indicate the undefined sample value for the i-th auxiliary picture. When not specified, the ti_undefined_sample_value_temporal[ i ] is set equal to 0.

The rest of the semantics can be found in section Semantics related to embodiment 2 of Carriage of multiplexing information using a SEI message.

***Carriage of multiplexed picture using an auxiliary picture***

Another method to carry the multiplexed pictures is to use auxiliary pictures as supported by video coding standards. This constitutes a multi-layer bitstream method.

In this method, a sequence of data (e.g., several image masks) is encoded as a sequence of multiplexed pictures and constitutes an auxiliary layer associated to the primary layer. A new SEI message that specifies additional metadata for the auxiliary layer may be possibly defined.

In the present case, the sequence of data corresponds to the sequence of multiplexed pictures, constituting the multiplexed auxiliary layer, and the primary layer contains the primary picture sequence. Additional metadata are needed to interpret the multiplexed picture sample values, among other parameters. These metadata can be signalled in a new SEI message that should be defined.

The following embodiment presents in section Scalability dimension information SEI message the modifications

of the scalability dimension information SEI defined in the Versatile Supplemental Enhancement Information (VSEI) [15] standard, section 8.19 (Scalability dimension information SEI message), and referenced by the H.266/VVC [12] standard; note that a similar extension in the scalable H.265/HEVC [11] can be achieved. Moreover, an example of a multiplexing information SEI message is presented in section Multiplexing information SEI message to signal the additional metadata. Other embodiments could be crafted following the same logic.

In the following embodiment, the described multiplexing information SEI message is following section Embodiment 3. Analogously, the multiplexing information SEI message could be modified accordingly to describe signalling following section Embodiment 1 or Embodiment 2.

**Scalability dimension information SEI message**

Syntax

| *scalability_dimension_info( payloadSize ) {* | ***Descriptor*** |
|---|---|
| ***sdi_max_ layers_minus1*** | *u(6)* |
| ***sdi_multiview_info_flag*** | *u(1)* |
| ***sdi_auxiliary_info_flag*** | *u(1)* |
| *if( sdi_multiview_info_flag \| \| sdi_auxiliary_info_flag ) {* | |
| *if( sdi_multiview_info_flag )* | |
| ***sdi_view_id_len_minus1*** | *u(4)* |
| *for( i = 0; i <= sdi_max_layers_minus1; i++ ) {* | |
| ***sdi_layer_id****[ i ]* | *u(6)* |
| *if( sdi_multiview_info_flag )* | |
| ***sdi_view_id_val****[ i ]* | *u(v)* |
| *if( sdi_auxiliary_info_flag )* | |
| ***sdi_aux_id****[ i ]* | *u(8)* |
| *if( sdi_aux_id[ i ] > 0 ) {* | |
| ***sdi_num_associated_primary_layers_minus1****[ i ]* | *u(6)* |
| *for(j = 0; j <= sdi_num_associated_primary_layer_minus1[ i ]; j++)* | |
| ***sdi_associated_primary_layer_idx****[ i ][ j ]* | *u(6)* |
| *}* | |
| *}* | |
| *}* | |
| *}* | |
| *}* | |

Semantics

*The scalability_dimension_info SEI message provides the Scalability Dimension Information (SDI) for each layer in the current Coded Video Sequence (CVS), i.e., the CVS containing the SDI SEI message, such as 1) when there may be multiple views, the view ID of each layer; and 2) when there may be auxiliary information (such as depth or alpha) carried by one or more layers, the auxiliary ID of each layer.*

*When an SDI SEI message is present in any Access Unit (AU) of a CVS, an SDI SEI message shall be present for the first AU of the CVS. All SDI SEI messages in a CVS shall have the same content. ...*

***sdi_aux_id****[ i ] equal to 0 indicates that the i-th layer in the current CVS does not contain auxiliary pictures. sdi_aux_id[ i ] greater than 0 indicates the type of auxiliary pictures in the i-th layer in the current CVS as specified in Table*

*15. When sdi_auxiliary_info_flag is equal to 0, the value of sdi_aux_id[ i ] is inferred to be equal to 0.*

***Table 15 - Mapping of sdi_aux_id[ i ] to the type of auxiliary pictures***

| ***sdi_aux_id[ i ]*** | ***Name*** | ***Type of auxiliary pictures*** |
|---|---|---|
| *1* | *AUX_ALPHA* | *Alpha plane* |
| 2 | *AUX_DEPTH* | *Depth picture* |
| 3 | AUX_MULTIPLEXED | Multiplexed picture |
| 4*..127* | | *Reserved* |
| *128..159* | | *Unspecified* |
| *160..255* | | *Reserved* |
| *NOTE 1 The interpretation of auxiliary pictures associated with sdi_aux_id[ i ] in the range of 128 to 159, inclusive, is specified through means other than the sdi_aux_id[ i ] value.* | | |

*sdi_aux_id[ i ] shall be in the range of 0 to* 3*, inclusive, or 128 to 159, inclusive, for bitstreams conforming to this version of this document. Although the value of sdi_aux_id[ i ] shall be in the range of 0 to* 3*, inclusive, or 128 to 159, inclusive, in this version of this document, decoders shall also allow other values of sdi_aux_id[ i ] in the range of 0 to 255, inclusive.*

*If sdi_aux_id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer.* When sdi_aux_id[ i ] is equal to 3, the i-th layer is also referred to as a multiplexed auxiliary layer.

**Multiplexing information SEI message**

In this case, a first SEI message carries the multiplexing information which comprises the number of auxiliary pictures, the type, bit depth, width and height of each auxiliary picture, whether each auxiliary picture is spatially aligned and related parameters if spatial alignment is applied. A second SEI message carries the dictionary information which comprises the dictionary. A third SEI message carries the temporal information which comprises whether each auxiliary picture is temporally aligned and related parameters if temporal alignment is applied. A fourth SEI message carries the offset information which comprises whether each auxiliary picture has aligned origin and related offset parameters if origin is not aligned. This way, in case for example parameters specified in one SEI message are updated, only the corresponding SEI message can be sent, reducing the overhead. The sequence of multiplexed pictures is encoded as auxiliary pictures of type AUX_MULTIPLEXED and is associated with the sequence of primary pictures.

Syntax

A new payload type may be defined as in Table 16.

Table 16 - Signalling of the number of auxiliary pictures, the type bit depth, width and height of each auxiliary picture, whether each auxiliary picture is spatially aligned and related parameters if spatial alignment is applied in a SEI message.

| multiplexing_info( payloadSize ) { | **Descriptor** |
|---|---|
| **mi_cancel_flag** | u(1) |
| if( ! mi_cancel_flag) { | |
| **mi_num_auxiliary_pictures** | u(8) |
| for( i = 0; i < mi_num_auxiliary_pictures; i++ ) { | |
| **mi_auxiliary_picture_type_id**[ i ] | u(8) |
| **mi_auxiliary_picture_bit_depth**[ i ] | u(4) |
| **mi_auxiliary_picture_width**[ i ] | u(12) |
| **mi_auxiliary_picture_height**[ i ] | u(12) |
| **mi_is_spatially_aligned**[ i ] | u(1) |

(continued)

| | |
|---|---|
| if ( mi_is_spatially_aligned[ i ] == 0 ) { | |
| **mi_spatial_alignment_type_id**[ i ] | u(4) |
| if ( mi_spatial_alignment_type_id[ i ] == 0 ) | |
| **mi_resampling_algorithm_id**[ i ] | u(4) |
| if ( mi_spatial_alignment_type_id[ i ] == 1 ) | |
| **mi_undefined_sample_value_spatial**[ i ] | u(9) |
| if ( mi_spatial_alignment_type_id[ i ] == 1 \|\| mi_spatial_alignment_type_id[ i ] == 2 ) { | |
| **mi_start_column**[ i ] | u(12) |
| **mi_end_column**[ i ] | u(12) |
| **mi_start_row**[ i ] | u(12) |
| **mi_end_row**[ i ] | u(12) |
| } | |
| } | |
| } | |
| } | |
| } | |

Table 17 - Signalling of the dictionary in a SEI message.

| dictionary_info( payloadSize ) { | **Descriptor** |
|---|---|
| **di_cancel_flag** | u(1) |
| if( ! di_cancel_flag) { | |
| **di_num_multiplexed_picture_sample_values** | u(16) |
| for( j = 0; j < di_num_multiplexed_picture_sample_values; j++ ) { | |
| **di_multiplexed_picture_sample_value**[ j ][ 0 ] | u(16) |
| for( k = 1; k <= mi_num_auxiliary_pictures; k++ ) | |
| **di_auxiliary_picture_sample_value**[ j ][ k ] | u(8) |
| } | |
| } | |
| } | |

Table 18 - Signalling of the whether each auxiliary picture is temporally aligned and related parameters if temporal alignment is applied in a SEI message.

| temporal_info( payloadSize ) { | **Descriptor** |
|---|---|
| **ti_cancel_flag** | u(1) |
| if( ! ti_cancel_flag) { | |
| for( i = 0; i < mi_num_auxiliary_pictures; i++ ) { | |
| **ti_is_temporally_aligned**[ i ] | u(1) |
| if ( ti_is_temporally_aligned[ i ] == 0 ) { | |
| **ti_temporal_alignment_type_id**[ i ] | u(4) |
| if ( ti_temporal_alignment_type_id[ i ] == 1 ) | |

(continued)

| **ti_undefined_sample_value_temporal**[ i ] | u(9) |
|---|---|
| } | |
| } | |
| } | |
| } | |

Table 19 - Signalling of the whether each auxiliary picture has aligned origin and related offset parameters if origin is not aligned in a SEI message.

| offsets_info( payloadSize ) { | **Descriptor** |
|---|---|
| **oi_cancel_flag** | u(1) |
| if( ! oi_cancel_flag) { | |
| for( i = 0; i < mi_num_auxiliary_pictures; i++ ) { | |
| **oi_is_origin_aligned**[ i ] | u(1) |
| if ( oi_is_origin_aligned[ i ] == 0 ) { | |
| **oi_origin_offset_reference_id**[ i ] | u(4) |
| **oi_origin_offset_horizontal**[ i ] | u(12) |
| **oi_origin_offset_vertical** [ i ] | u(12) |
| } | |
| } | |
| } | |
| } | |

Semantics

The multiplexing_info SEI message provides information that describes the number of auxiliary pictures, the type, bit depth, width and height of each auxiliary picture, whether each auxiliary picture is spatially aligned and related parameters if spatial alignment is applied. The dictionary_info SEI message provides information that describes the dictionary. The temporal_info SEI message provides information that describes whether each auxiliary picture is temporally aligned and related parameters if temporal alignment is applied. The offsets_info SEI message provides information that describes whether each auxiliary picture has aligned origin and related offset parameters if origin is not aligned. All SEI messages are defined up to a frame.

**oi_cancel_flag** equal to 1 indicates that the SEI message cancels the persistence of any previous offsets_info SEI message. When equal to 0, the information that should be considered follows.

**oi_is_origin_aligned**[ i ] specifies whether the origin of the i-th auxiliary picture is aligned to the origin of the primary picture. When equal to 0, the origins are not aligned. When equal to 1, the origins are aligned.

**oi_origin_offset_reference_id**[ n ] specifies an identifier of the reference for the origin of the i-th auxiliary picture relative to the origin of the primary picture. When equal to 0, the top-left corner is used as reference. When equal to 1, the top-right corner is used as reference. When equal to 2, the bottom-left corner is used. When equal to 3, the bottom-right corner is used. Larger values are reserved for future usage

**oi_origin_offset_h**[ i ] specifies the horizontal offset of the i-th auxiliary picture relative to the origin of the primary picture. When not specified, the oi_origin_offset_h[ i ] is set equal to 0.

**oi_origin_offset_v**[ i ] specifies the vertical offset of the i-th auxiliary picture relative to the origin of the primary picture. When not specified, the oi_origin_offset_v[ i ] is set equal to 0.

The rest of the semantics can be found in section Semantics related to embodiment 2 of Carriage of multiplexing information using a SEI message.

## Signalling in media container

For the purpose of the invention, the multiplexing information may need to be signalled on a higher level, to be obtained before accessing the video bitstream. Therefore, they may be signalled in the file container's metadata.

The proposed signalling is based on ISOBMFF [14] standard, which defines a binary structure for storing media and metadata data. However, similar metadata may be also transmitted in any other file-based (e.g., WebM) or packet-based (e.g., RTP) containers.

To store the multiplexing information in a file container, it is important to consider whether the information is static or dynamic, that is whether it varies over time. In the following sections, signalling examples for static metadata are provided, which is the most relevant case.

The schematic representations of the ISOBMFF files presented in the following sections contain simplifications of the actual box hierarchy.

A timed metadata track could be additionally used to signal dynamic metadata comprising temporal information.

## Carriage of multiplexed pictures using a video track

In this case, the multiplexing information is signalled as untimed (i.e., static) metadata in a box contained in the trak structure, and the sequence of multiplexed pictures is carried as a video track.

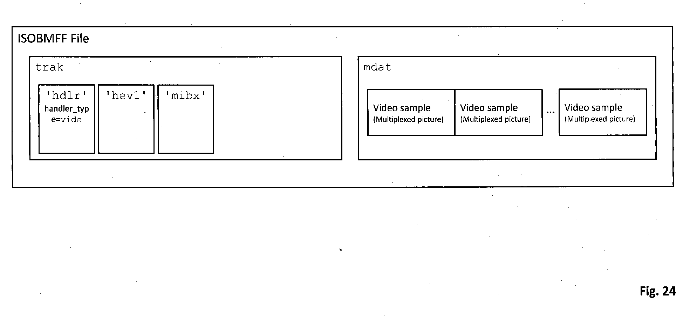

In the following example, illustrated in Fig. 24, the mdat box of the video track is carrying the sequence of multiplexed pictures. The video track is identified by the 'vide' handler type in the HandlerBox of the MediaBox. According to ISOBMFF [14][14], section 12.1.1 (Media handler):

- *Video media uses the 'vide' handler type in the HandlerBox of the MediaBox, as defined in 8.4.3.*

In this example, the video track is encoded using the H.265/HEVC [11] codec, with the encoding and the track following the constraints defined by the 'hev1' sample entry, as specified in the ISO/IEC 14496-15 [18] standard. The new box called MultiplexingInfoBox (with character code 'mibx') is carrying the multiplexing information and is defined as a child of the trak box.

To signal the multiplexing information, the same effect can be reached by using another trak box (e.g., MetaBox) or by combining metadata using entity grouping, or associating the metadata with samples of the track using sample groups.

In the following embodiment, the described MultiplexingInfoBox is following section Embodiment 2. Analogously, the MultiplexingInfoBox could be modified accordingly to describe signalling following section Embodiment 1.

## Syntax

aligned(8) class MultiplexingInfoBox extends FullBox('mibx', 0, 0) { unsigned int (8) num_auxiliary_pictures;

```
for (i=0; i<num_auxiliary_pictures; i++) {
      unsigned int(8) auxiliary_picture_type_id[i];
      unsigned int(4) auxiliary _picture_bit_depth[i] ;
      unsigned int (12) auxiliary _picture_width[i];
      unsigned int(12) auxiliary_picture_height[i];
      unsigned int(1) is_spatially_aligned[i];
      if (is_spatially_aligned[i]==0) {
         unsigned int(4) spatial_alignment_type_id[i];
         if (spatial_alignment_type_id[i]==0)
             unsigned int (4) resampling_algorithm_id[i];
         if (spatial_alignment_type_id[i]==1)
             unsigned int (9) undefined_sample_value_spatial[i];
         if (spatial_alignment_type_id[i]==1 ||
                spatial_alignment_type_id[i]==2) {
             unsigned int (12) start_column[i];
            unsigned int(12) end_column[i];
            unsigned int(12) start_row[i];
            unsigned int(12) end_row[i];
           }
     }
   }
   unsigned int (16) num_multiplexed_picture_sample_values;
   for (j=0; j<num_multiplexed_picture_sample_values; j++) {
      unsigned int (16) multiplexed_picture_sample_value[j][0];
      for (k=1; k<=num_auxiliary_pictures; k++)
         unsigned int (8) auxiliary_picture_sample_value[j][k]; }
```

```
}
```

**Semantics**

**The semantics can be found in section Semantics related to embodiment 2 of Carriage of multiplexing information using a SEI message.**

**Carriage of multiplexed pictures using an auxiliary video track**

**In this case, the multiplexing information is signalled as untimed (i.e., static) metadata in a box contained in the** trak **structure, and the sequence of multiplexed pictures is carried as an auxiliary video track associated to a primary video track that carries a sequence of primary pictures.**

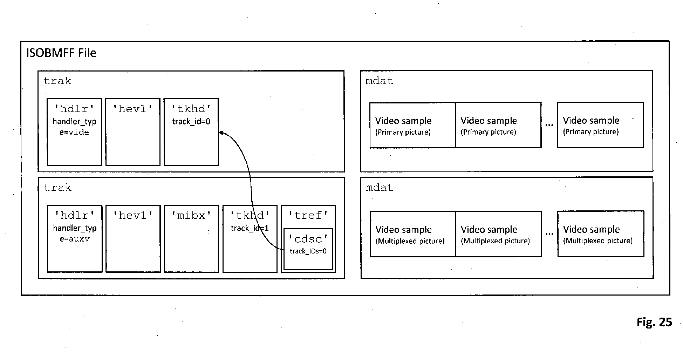

**In Fig. 25, a structure of an ISOBMFF file with untimed metadata for multiplexing information, a primary track carrying a sequence of primary pictures and an auxiliary video track carrying a** sequence of multiplexed pictures is shown. In the following example, illustrated in Fig. 25, the mdat box of the video track with id = 0 is carrying the sequence of primary pictures, and the mdat box of the auxiliary video track with id = 1 is carrying the sequence of multiplexed pictures. The video track is identified by the 'vide' handler type, while the auxiliary video track by the 'auxv' handler type in the HandlerBox of the MediaBox. According to ISOBMFF [14], section 12.1.1 (Media handler):

- *Video media uses the 'vide' handler type in the HandlerBox of the MediaBox, as defined in 8.4.3.*
- *Auxiliary video media uses the* '*auxv*' *handler type in the* HandlerBox *of the* MediaBox, *as defined in 8.4.3.*

In this example, both tracks are encoded using the H.265/HEVC [11] codec, with the encoding and the tracks following the constraints defined by the 'hev1' sample entry, as specified in the ISO/IEC 14496-15 [18] standard. The auxiliary video track (id = 1) contains a track reference box (with character code 'tref') including a reference of type 'cdsc' to the video track (id = 0), as defined in ISOBMFF [14], having the following meaning:

- '*cdsc*' *links a descriptive or metadata track to the content which it describes.*

According to ISOBMFF [14], section 12.1.1 (Media handler):

- *An auxiliary video track is coded the same as a video track, but uses this different handler type, and is not intended to be visually displayed (e.g., it contains depth information, or other monochrome or colour two-dimensional information). Auxiliary video tracks are usually linked to a video track by an appropriate track reference.*

The new box called MultiplexingInfoBox (with character code 'mibx') is carrying the multiplexing information and is defined as a child of the trak box.

In the following embodiment, it is considered that video and auxiliary video tracks are contained in two mdat, as shown in Fig. 25. In other embodiments, the samples could be contained in one mdat, and in that case, the samples would be interleaved.

In the following embodiment, it is considered that video and auxiliary video tracks are contained in the same file, as shown in Fig. 25. In other embodiments, the two tracks could be contained in two separate files.

In the following embodiment, the described MultiplexingInfoBox is following section Embodiment 2. Analogously, the MultiplexingInfoBox could be modified accordingly to describe signalling following section Embodiment 1.

**Syntax**

aligned(8) class MultiplexingInfoBox extends FullBox('mibx', 0, 0) { unsigned int(8) num_auxiliary_pictures;

```
for (i=0; i<num_auxiliary_pictures; i++) {
       unsigned int(8) auxiliary_picture_type_id[i];
       unsigned int(4) auxiliary_picture_bit_depth[i];
       unsigned int(12) auxiliary_picture_width[i];
       unsigned int(12) auxiliary_picture_height[i];
       unsigned int(1) is_spatially_aligned[i];
       if (is_spatially_aligned[i]==0) {
           unsigned int(4) spatial_alignment_type_id[i];
           if (spatial_alignment_type_id[i]==0)
```

```
                unsigned int(4) resampling_algorithm_id[i];
            if (spatial_alignment_type_id[i]==1)
                unsigned int(9) undefined_sample_value_spatial[i];
            if (spatial_alignment_type_id[i]==1 ||
                    spatial_alignment_type_id[i]==2) {
                unsigned int(12) start_column[i];
                unsigned int(12) end_column[i];
                unsigned int(12) start _row[i];
                unsigned int(12) end_row[i]; }
          }
        unsigned int(1) is_origin_aligned[i]
        if (is_origin_aligned[i]==0) {
            unsigned int(4) origin_offset_reference_id[i];
            unsigned int(12) origin_offset_horizontal[i];
            unsigned int(12) origin_offset_vertical[i];
          }
    }
    unsigned int(16) num_multiplexed_picture_sample_values;
    for (j=0; j<num_multiplexed_picture_sample_values; j++) {
        unsigned int(16) multiplexed_picture_sample_value[j][0];
        for (k=1; k<=num _auxiliary_pictures; k++)
            unsigned int(8) auxiliary_picture_sample_value[j][k];
    }
    }
```

**Semantics**

**The semantics can be found in section Semantics related to embodiment 2 of Carriage of multiplexing information using a SEI message.**

**Beneficial effects of the solution**

- Embodiments enable reduction of the number of bits wasted for representing, encoding and storing of multiple auxiliary pictures of limited bit depth.
- Embodiments enable complexity reduction due to the usage of a single encoding and decoding instance for all sequences of auxiliary pictures (i.e., instead of using one encoding and one decoding instance per sequence of auxiliary pictures).
- Embodiments enable a codec-agnostic solution.
- Embodiments enable bitrate savings due to the usage of less samples by aligning and signalling the origin of each auxiliary picture relative to the origin of the primary picture.
- Embodiments enable complexity reduction due to the absence of need for synchronization of temporally aligned sequences of auxiliary pictures.

**Further applicability of the solution**

- The solution can also apply to auxiliary or conventional pictures of higher bit depth (i.e., n>=8).
- The solution can also apply to different types of imaging, e.g., texture, depth, infra-red, confidence maps, etc. and for different combinations of possibly different types of imaging.
- The solution can also apply to video-based point cloud compression to multiplex attribute maps for geometry/attribute encoding.

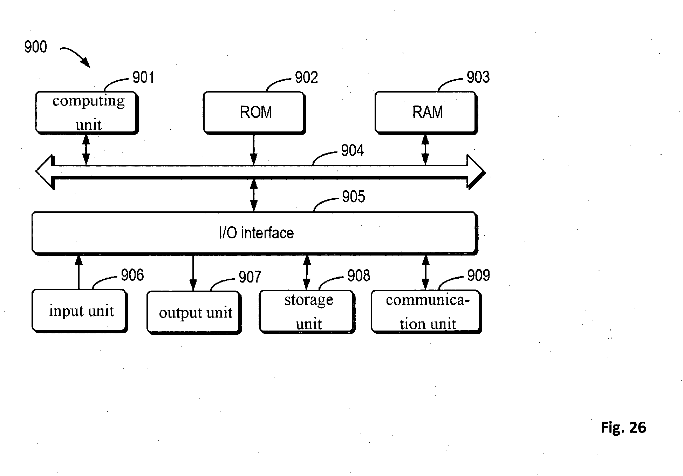

Fig. 26 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read

only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local

Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

In the following, additional embodiments and aspects of the invention will be described which can be used individually or in combination with any of the features and functionalities and details described herein.

A 1st embodiment provides a method for encoding a plurality of arrays of data values, the method comprising:

obtaining a first array comprising a plurality of first fields containing first data values; and obtaining at least a second array comprising a plurality of second fields containing second data values;

determining a plurality of multiplexed data values [means: tuple] from the plurality of first fields and the plurality of second fields by multiplexing the first data values and the second data values according to a multiplexing rule;

providing the plurality of multiplexed data values.

A 2nd embodiment provides the method according to the 1st embodiment, further comprising:

generating metadata describing the multiplexing rule; and

providing the metadata, e.g., together with the plurality of multiplexed data values.

A 3rd embodiment provides the method according to the 1st or 2nd embodiment, wherein the first array is a 2D array of image data having at least one channel and wherein the second array is a 2D array of image data; wherein the plurality of multiplexed data values form a multiplexed 2D array.

A 4th embodiment provides the method according to one of the previous embodiments, further comprising:
determining a multiplexed array comprising a plurality of multiplexed fields; such that the plurality of multiplexed data values are included into the plurality of multiplexed fields.

A 5th embodiment provides the method according to the 4th embodiment, executed such that the plurality of multiplexed fields comprises a predetermined bit depth; wherein the multiplexed data values are determined to be within the predetermined bit depth.

A 6th embodiment provides the method according to one of the previous embodiments, further comprising:
determining association information associating a tuple comprising a first data value and a second data value on the one hand with the multiplexed data value on the other hand; such that the multiplexing rule is based on the association information.

A 7th embodiment provides the method according to the 6th embodiment, wherein the association information is determined, such that within a range of values of the multiplexed data values, the determined multiplexed data values comprise a maximized distance between each other; or
wherein the association information is determined, such that within a range of values of the multiplexed data values, the multiplexed data values are determined based on bitmask positions of a bitmask applied to a picture underlying the first array and/or the second array; wherein metadata is generated to indicate a mapping between the first array and the second array on the one hand and bitmask positions on the other hand.

An 8th embodiment provides the method according to one of the previous embodiments, further comprising:

determining dictionary information as an association information, the dictionary information mapping a combination being based on a first data value and a second data value to the multiplexed data value; such that the multiplexing rule is based on the dictionary information; or

obtaining the association information as a predetermined information; such that metadata generated for describing the multiplexing rule is independent from the association information.

A 9th embodiment provides the method according to the 8th embodiment, wherein the metadata is generated to comprise multiplexing information indicating the association information; or
wherein the method comprises:

performing a transformation to obtain a transformed dictionary information; and

including the transformed dictionary in the metadata.

A 10th embodiment provides the method according to the 9th embodiment, wherein the dictionary information comprises tuple information indicating sample values used for a tuple of sample values subject of the multiplexing; and comprises value information indicating a value associated with the tuple; wherein the transformed dictionary information is obtained by swapping the tuple information and the value information.

An 11th embodiment provides the method according to one of the previous embodiments, comprising:
determining one of:

- a dictionary information;
- a look-up table;
- a map,
- a symbol table;
- a data structure to store a collection of key-value pairs.

for indicating an association of a multiplexed data value and a first and second data value.

A 12th embodiment provides the method according to one of the previous embodiments, wherein the first array and the second array relate to image data; wherein a first data value and a second data value being used for a multiplexed data value are co-located.

A 13th embodiment provides the method according to one of the previous embodiments, wherein a first data value and a second data value being used for a multiplexed data value are located at corresponding locations in the first array and in the second array.

A 14th embodiment provides the method according to one of the previous embodiments, wherein determining one of the plurality of multiplexed data values comprises:

generating a tuple by using a first data value [means: sample] of the first array and a co-located second data value of the second array; .

using the tuple to determine a multiplexed data value; and

assigning the multiplexed data value to a field of the multiplexed array at a location corresponding to a location of the first data value in the first array and a location of the second data value of the second array.

A 15th embodiment provides the method according to the 14th embodiment, wherein the tuple is generated to be an ordered list of a predefined amount of elements.

A 16th embodiment provides the method according to one of the previous embodiments, wherein providing the plurality of multiplexed data values comprises:
encoding a multiplexed array comprising the plurality of multiplexed data values together with the metadata generated for describing the multiplexing rule.

A 17th embodiment provides the method according to the 16th embodiment, wherein the encoding is executed using a lossy compression, wherein the lossy compression maps a plurality of ranges of neighbouring first data values to a corresponding first compressed data value; and/or wherein the lossy compression maps a plurality of ranges of neighbouring second data values to a corresponding second compressed data value.

An 18th embodiment provides the method according to the 16th embodiment, wherein the first ranges are at least one of:

- uniform or non-uniform, e.g., based on an importance associated with the sample values;
- continuous or non-continuous;
  and/or

wherein the second ranges are at least one of:

- uniform or non-uniform, e.g., based on an importance associated with the sample values;
- continuous or non-continuous.

A 19th embodiment provides the method according to the 17th or 18th embodiment, wherein at least one first data value is assigned to at least two ranges of neighbouring first data values; and/or wherein at least one second data value is assigned to at least two ranges of neighbouring second data values.

A 20th embodiment provides the method according to one of the 16th to 18th embodiments, wherein the encoding is executed using a lossy compression, wherein the lossy compression comprises obtaining the multiplexed data value and mapping the multiplexed data value to a centroid of an associated interval of values, the interval being a one of a plurality of non-overlapping intervals, the plurality of intervals covering an encoding range of encoding the multiplexed data value.

A 21st embodiment provides the method according to one of the 16th to 20th embodiments, wherein after encoding, the multiplexed data values are encapsulated together with generated metadata to obtain encapsulated data.

A 22nd embodiment provides the method according to the 21st embodiment, wherein the encapsulation is performed in one of a bitstream level or a file format level.

A 23rd embodiment provides the method according to the 21st or 22nd embodiment, wherein encapsulated data is transmitted over a network either as a stream or as a part of a data file, or is stored in a device executing the method and as a file.

A 24th embodiment provides the method according to the 16th embodiment, wherein the encoding is executed using a lossless compression.

A 25th embodiment provides the method according to one of the previous embodiments,

wherein at least one of the first array and the second array comprises binary sample values; or

wherein the first array and the second array comprise sample values of a same bit depth being greater than 1; or of different bit depths.

A 26th embodiment provides the method according to one of the previous embodiments, further comprising:

obtaining a third array comprising a plurality of third fields containing third data values;

such that the multiplexed data values are determined from the plurality of first fields, the plurality of second fields and the plurality of third fields by multiplexing the first data values, the second data values and the third data values according to the multiplexing rule.

A 27th embodiment provides the method according to one of the previous embodiments, wherein metadata is generated to indicate at least one of:

- a number of arrays used for the multiplexing; and
- a bit depth of at least one of the arrays used for the multiplexing.

A $28^{th}$ embodiment provides the method according to one of the $1^{st}$ to $27^{th}$ embodiments, wherein the first data values and/or the second data values comprise sample values of a mono-component picture.

A $29^{th}$ embodiment provides the method according to one of the $1^{st}$ to $27^{th}$ embodiments,

wherein the first data values and/or the second data values comprise sample values of a multi-component picture; and

wherein the first data values of the first array are sample values of a first component of a first picture; and the second data values of the second array are sample values of the first component of a second picture; or

wherein the first data values of the first array are sample values of a first component of a first picture; and the second data values of the second array are sample values of a second component of the first picture.

A $30^{th}$ embodiment provides the method according to the $29^{th}$ embodiment, wherein the determining of the plurality of multiplexed data values is repeated or executed for each component of the multicomponent picture.

A $31^{th}$ embodiment provides the method according to the $29^{th}$ or $30^{th}$ embodiments, wherein the first component and the second component comprise a same spatial relationship and a sample value of the first array corresponds to a sample value of the second array.

A $32^{nd}$ embodiment provides the method according to one of the previous embodiments, wherein a sample value of the first array corresponds to a sample value of the second array based on a same location in a picture.

A $33^{rd}$ embodiment provides the method according to one of the previous embodiments, wherein the first array and the second array comprise different spatial resolutions, or the sample values of the first array deviate from a 1-1 correspondence of the sample values of the second array with regard to location in a picture; the method further comprising:
aligning differing spatial resolutions of the first array and the second array, or applying an image processing operation, e.g., a samples re-arrangement function to obtain the 1-1 correspondence based on the same sample location before multiplexing the first data values and the second data values.

A $34^{th}$ embodiment provides the method according to the $33^{rd}$ embodiment, wherein the aligning comprises:
mapping a smaller spatial resolution of the first and second array to a larger spatial resolution of the first and second array.

A $35^{th}$ embodiment provides the method according to the $34^{th}$ embodiment, wherein the mapping comprises a resampling of the smaller resolution.

A $36^{th}$ embodiment provides the method according to the $35^{th}$ embodiment, further comprising:
selecting a resampling method from a plurality of resampling methods based on a known spatial relationship between a first component of a picture forming the first data values and a second component of the picture forming data values of a different array [i.e.; the second or a third array].

A $37^{th}$ embodiment provides the method according to the $35^{th}$ or $36^{th}$ embodiment, wherein metadata is generated to indicate at least one of:

- an indicator of a resampling operation of the resampling;
- at least one parameter of the resampling; and
- an original spatial resolution of the array comprising the smaller spatial resolution.

A $38^{th}$ embodiment provides the method according to one of the $33^{rd}$ to $37^{th}$ embodiments, wherein the aligning comprises:
padding the array comprising the smaller spatial resolution using a dedicated sample value that represents an undefined sample value.

A 39th embodiment provides the method according to the 38th embodiment, comprising:

determining dictionary information as an association information, the dictionary information mapping a combination being based on a first data value and a second data value to the multiplexed data value; such that the multiplexing rule is based on the dictionary information; and
associating a unique value of the dictionary information with the dedicated sample value that represents the undefined sample value.

A 40th embodiment provides the method according to the 38th or 39th embodiment, wherein metadata is generated to indicate padding information for array comprising the smaller spatial resolution

A 41st embodiment provides the method according to the 40th embodiment, where the padding information comprises at least one of:

- an indicator indicating the padding operation;
- information indicating the selected undefined sample value, and
- information indicating an original spatial resolution array comprising the smaller spatial resolution.

A 42nd embodiment provides the method according to the 33rd to 41st embodiments, wherein the aligning comprises: padding the array comprising the smaller spatial resolution using a valid sample value to obtain a padded array; wherein the method comprises:
providing spatial information indicating at least one of padded or non-padded sample values of the padded array.

A 43th embodiment provides the method according to the 42nd embodiment, wherein metadata is generated to indicate at least one of:

- padding information indicating a spatial resolution of the padded array and/or indicating the padding operation; and
- the spatial information.

A 44th embodiment provides the method according to the 42nd or 43rd embodiment, wherein the spatial information comprises at least one of:

- spatial coordinates,
- bounding boxes, and
- binary masks

to indicate padded regions and/or non-padded regions.

A 45th embodiment provides the method according to one of the 33rd to 44th embodiments, wherein the aligning comprises:
mapping a larger spatial resolution of the first and second array to a smaller spatial resolution of the first and second array.

A 46th embodiment provides the method according to the 45th embodiment, wherein the mapping comprises a resampling of the larger spatial resolution; or applying cropping to the array comprising the larger spatial resolution.

A 47th embodiment provides the method according to the 45th or 46th embodiment, wherein metadata is generated to indicate at least one of:

- an indicator of a resampling operation of the resampling;
- at least one parameter of the resampling; and
- cropping information for the array comprising the larger spatial resolution.

A 48th embodiment provides the method according to the 47th embodiment, wherein the resampling information comprises an indicator of the resampling operation, parameters of the resampling and/or an original spatial resolution of the array comprising the larger spatial resolution.

A 49th embodiment provides the method according to the 47th or 48th embodiment, wherein the cropping information comprises an indicator of the cropping operation and/or information indicating which rows and/or columns are cropped.

A 50th embodiment provides the method according to one of the 33rd to 49th embodiments, comprising a step of at least one of:

- applying resampling to the first array and to the second array;
- applying padding to the first array and to the second array; and
- applying cropping to the first array and to the second array.

A 51st embodiment provides the method according to the 50th embodiment, wherein the padding is applied using a dedicated sample value that represents an undefined sample value;
wherein the method comprises determining dictionary information as an association information, the dictionary information mapping a combination being based on a first data value and a second data value to the multiplexed data value; such that the multiplexing rule is based on the dictionary information; and uniquely associating each a unique value of the dictionary information with a tuple of the first dedicated sample value and the second dedicated sample value that comprises at least one undefined sample value.

A 52nd embodiment provides the method according to the 51st embodiment, wherein metadata is generated to signal one of resampling information relating to the resampling; padding information relating to the padding; and cropping information related to the cropping for the first and second array.

A 53rd embodiment provides the method according to one of the previous embodiments, wherein a sample value of the first array deviate from a 1-1 correspondence of a sample value of the second array with regard to a location in a picture; wherein the method comprises:
executing an image processing operation to obtain the 1-1 correspondence based on the same sample location.

A 54th embodiment provides the method according to the 53rd embodiment, wherein the image processing comprises applying a samples re-arrangement function.

A 55th embodiment provides the method according to the 53rd or 54th embodiment, wherein metadata is generated to signal the image processing, e.g., the samples re-arrangement information, for the first array and/or the second array.

A 56th embodiment provides the method according to one of the 1st to 55th embodiments, wherein the first array and the second array comprises sample values of auxiliary pictures that are unassociated with a primary picture.

A 57th embodiment provides the method according to one of the 1st to 55th embodiments, wherein the first array and the second array comprises sample values of auxiliary pictures that are associated with a primary picture; wherein the multiplexed data values is associated with the primary picture.

A 58th embodiment provides the method according to the 57th embodiment, wherein metadata is generated to indicate an association between the multiplexed data values and the primary picture.

A 59th embodiment provides the method according to the 57th or 58th embodiment, further comprising: signalling a relationship between the auxiliary pictures and the primary picture, e.g., for a spatial resolution alignment; and/or apply image processing operations to the multiplexed data values; and optionally generating metadata to indicate the image processing operations.

A 60th embodiment provides the method according to one of the previous claims embodiments, wherein the first array and the second array are auxiliary pictures and comprise spatial origins within a primary picture.

A 61st embodiment provides the method according to the 60th embodiment, wherein a first spatial origin of the first array and a second spatial origin of the second array within the primary picture comprise an offset and are different when compared to a primary spatial origin of the primary picture.

A 62nd embodiment provides the method according to the 61st embodiment, wherein the first spatial origin and the second spatial origin within the primary picture are used for an alignment of a spatial resolution of the first array and a

spatial resolution of the second array before generating the multiplexed data values.

A 63rd embodiment provides the method according to the 62nd embodiment, wherein the alignment comprises to maintain a difference between the first spatial origin and the second spatial origin within the primary picture, and applying image processing operations to align their spatial resolutions.

A 64th embodiment provides the method according to the 63rd embodiment, wherein the image processing operations comprise at least one of:

- applying resampling to the first array and to the second array;
- applying padding to the first array and to the second array; and
- applying cropping to the first array and to the second array.

A 65th embodiment provides the method according to the 64th embodiment, wherein metadata is generated to signal one of resampling information relating to the resampling; padding information relating to the padding; and cropping information related to the cropping for the first and second array.

A 66th embodiment provides the method according to one of the 61st to 65th embodiments, comprising: using a signalling to indicate the offset between the spatial origins of the first and second array and the primary picture.

A 67th embodiment provides the method according to one of the 62nd to 66th embodiments, wherein the alignment comprises to shift the spatial origin of at least one of the first array and the second array within the primary picture to match them to a common origin; and applying image processing operations to align their spatial resolutions.

A 68th embodiment provides the method according to the 67th embodiment, wherein the image processing operations comprise at least one of:

- applying resampling to the first array and to the second array;
- applying padding to the first array and to the second array; and
- applying cropping to the first array and to the second array.

A 69th embodiment provides the method according to the 68th embodiment, wherein metadata is generated to signal one of resampling information relating to the resampling; padding information relating to the padding; and cropping information related to the cropping for the first and second array.

A 70th embodiment provides the method according to one of the 61st to 69th embodiments, wherein metadata is generated to signal offset information indicating the offset of the spatial origins of the first array and second array within the primary picture.

A 71st embodiment provides the method according to the 70th embodiment, wherein the offset information comprises a vertical offset and a horizontal offset of the spatial origin of each of the first array and the second array relative to the spatial origin of the primary picture; or

wherein one of the first and second array is used as a reference array; wherein a vertical offset and a horizontal offset of the spatial origin of this reference are determined relative to the spatial origin of the primary picture; and a vertical offset and a horizontal offset of the spatial origins of remaining arrays are determined relative to the spatial origin of this reference; or

wherein a vertical offset and a horizontal offset of the spatial origin of each of the first and second array are determined relative to the spatial origin of a previous array following a specific order, where the vertical offset and the horizontal offset of the spatial origin of a first-ordered array in this order determined relative to the primary picture.

A 72nd embodiment provides the method according to the 70th or 71st embodiment, wherein the offset information additionally comprises an origin location or an indicator of the origin location.

A 73rd embodiment provides the method according to one of the 1st to 72nd embodiments, wherein the first array and the second array are static arrays.

A 74$^{th}$ embodiment provides the method according to one of the 1$^{st}$ to 72$^{nd}$ embodiments, wherein the first array is one of a sequence of first arrays and the second array is one of a sequence of second arrays; wherein the sequence of first array is temporally aligned or unaligned with respect to the sequence of second arrays.

A 75$^{th}$ embodiment provides the method according to the 74$^{th}$ embodiment, wherein for temporally unaligned sequences the method comprises to execute an adjustment, to indicate for at least one, for a plurality or for every time instance the arrays to be multiplexed and an applicable association information associating a tuple comprising a first data value and a second data value on the one hand with the multiplexed data value on the other hand; such that the multiplexing rule is based on the association information.

A 76$^{th}$ embodiment provides the method according to the 74$^{th}$ or 75$^{th}$ embodiment, wherein for temporally unaligned sequences, the method comprises applying a padding to the sequence of first arrays and/or the sequence of second arrays that is not present at a given time instance using undefined sample values or valid sample values plus spatial information.

A 77$^{th}$ embodiment provides the method according to the 76$^{th}$ embodiment, wherein metadata is generated to signal padding information and identifiers of a padded and/or non-padded arrays contained in a multiplexed array at a given time instance.

A 78$^{th}$ embodiment provides the method according to one of the 74$^{th}$ to 77$^{th}$ embodiments, wherein for temporally unaligned sequences the method comprises determining a dictionary comprising tuples based on possible combinations of sample values from sequences of the first arrays and the second arrays that comprise an overlap in time.

A 79$^{th}$ embodiment provides the method according to the 78$^{th}$ embodiment, wherein metadata is generated to signal the dictionary and/or indicators specifying the arrays that are present in a multiplexed array at a given time instance.

An 80$^{th}$ embodiment provides the method according to one of the 74$^{th}$ to 77$^{th}$ embodiments, wherein for temporally unaligned sequences the method comprises determining dictionaries, one for each set of sequences of first arrays and second arrays that have an overlap in their timeline and signalling an indicator of the dictionary or dictionary to be used with a multiplexed array at a given time instance.

An 81$^{st}$ embodiment provides the method according to the 80$^{th}$ embodiment, where the dictionaries are determined to comprise same values.

An 82$^{nd}$ embodiment provides the method according to the 80$^{th}$ or 81$^{st}$ embodiment, wherein metadata is generated to signal at least one of:

- the different dictionaries;
- an indicator of the dictionary to be used;
- an indicator specifying the first arrays and/or second arrays that are present in the multiplexed array at a given time instance; and
- a pattern that describes the overlap the sequences of source 2d arrays have in their timeline.

An 83$^{rd}$ embodiment provides the method according to one of the previous embodiments, wherein a first sequence of first arrays and/or a second sequence of second arrays contain sample values of auxiliary videos that are associated with a primary video comprising primary video frames;

wherein spatial origins of the first and/or second arrays within the primary video frames vary across time and comprise an offset related to differing spatial origins;

wherein the method comprises to update offset information indicating the offset based on a change of a spatial origin; and/or

wherein the method comprises determining vertical and/or horizontal offsets of the spatial origin of each of the first array of the first sequence and/or second array of the second sequence relative to a spatial origin of a previous array that belongs to the same sequence of arrays.

An 84$^{th}$ embodiment provides the method according to one of the 1$^{st}$ to 83$^{rd}$ embodiments, wherein a number of arrays

used for multiplexing is predetermined.

An 85$^{th}$ embodiment provides the method according to one of the 1$^{st}$ to 83$^{rd}$ embodiments, wherein a number of arrays used for multiplexing is implicitly signalled; or is explicitly provided as part of metadata generated for describing the multiplexing rule.

An 86$^{th}$ embodiment provides the method according to one of the 1$^{st}$ to 85$^{th}$ embodiments, wherein the first array and the second array are unassociated with metadata.

An 87$^{th}$ embodiment provides the method according to one of the 1$^{st}$ to 85$^{th}$ embodiments, wherein the first array and the second array are associated with associated metadata; wherein metadata is generated to comprise the associated metadata.

An 88$^{th}$ embodiment provides the method according to one of the previous embodiments, further comprising: postprocessing the multiplexed data values.

An 89$^{th}$ embodiment provides the method according to the 88$^{th}$ embodiment, wherein the postprocessing leads to a reduced bitrate.

A 90$^{th}$ embodiment provides the method according to the 89$^{th}$ embodiment, wherein metadata is generated to signal post-processing information indicating the applied post-processing.

A 91$^{st}$ embodiment provides the method according to one of the 1$^{st}$ to 90$^{th}$ embodiments, wherein metadata generated for describing the multiplexing rule is provided as part of a video bitstream; wherein the multiplexed data values are encoded as a video frame; and wherein the metadata is related to reconstructing the first array and the second array from the multiplexed data values.

A 92$^{nd}$ embodiment provides the method according to the 91$^{st}$ embodiment, wherein metadata generated for describing the multiplexing rule is signalled using at least one Supplemental Enhancement Information, SEI, message; and/or using an auxiliary picture.

A 93rd embodiment provides the method according to the 92$^{nd}$ embodiment, wherein the at least one SEI message carries multiplexing information comprising a number of auxiliary pictures, a type and a bit depth of each auxiliary picture, and association information associating a tuple comprising a first data value and a second data value on the one hand with the multiplexed data value on the other hand; such that the multiplexing rule is based on the association information; and/or
comprises at least one of:

information specifying a number of the auxiliary pictures contained in the multiplexed picture;

information specifying an identifier of the type of the i-th auxiliary picture;

information specifying a bit depth of the i-th auxiliary picture;

information specifying a number of the multiplexed picture sample values;

information specifying a j-th multiplexed picture sample value; and/or

information specifying an auxiliary picture sample value of the k-th auxiliary picture that corresponds to the j-th multiplexed picture sample value;

information specifying a width of the i-th auxiliary picture.

information specifying a height of the i-th auxiliary picture.

information specifying whether the i-th auxiliary picture is spatially aligned;

information specifying an identifier of the type of spatial alignment applied to the i-th auxiliary picture;

information specifying an identifier of the algorithm used for resampling the i-th auxiliary picture;

information specifying a value used to indicate the undefined sample value for the i-th auxiliary picture;

information specifying a column of the multiplexed picture that corresponds to the first column of the i-th auxiliary picture;

information specifying a column of the multiplexed picture that corresponds to the last column of the i-th auxiliary picture;

information specifying a row of the multiplexed picture that corresponds to the first row of the i-th auxiliary picture;

information specifying a row of the multiplexed picture that corresponds to the last row of the i-th auxiliary picture;

a dictionary; and

temporal information which comprises whether each auxiliary picture is temporally aligned and/or related parameters if temporal alignment is applied.

A 94$^{th}$ embodiment provides the method according to one of the 91$^{st}$ to 93$^{rd}$ embodiments, wherein the metadata is generated to form a part of the video bitstream's metadata.

A 95$^{th}$ embodiment provides the method according to one of the 91$^{st}$ to 94$^{th}$ embodiments, wherein the video bitstream is in accordance with a NAL-based video coding standards; an AV1 standard or an AV2 standard.

A 96$^{th}$ embodiment provides the method according to one of the 91$^{st}$ to 95$^{th}$ embodiments, wherein the multiplexed data values are part of a multiplexed picture that is carried using one auxiliary picture;
wherein a sequence of multiplexed data is encoded as a sequence of multiplexed pictures and constitutes an auxiliary layer associated to a primary layer.

A 97$^{th}$ embodiment provides the method according to the 96$^{th}$ embodiment, wherein the sequence of multiplexed data corresponds to the sequence of multiplexed pictures, constituting the multiplexed auxiliary layer, and the primary layer contains the primary picture sequence; wherein the metadata is generated to interpret the multiplexed picture sample values, wherein said metadata is signalled in a SEI message;
wherein the SEI message comprises information indicating an auxiliary picture as a multiplexed picture.

A 98$^{th}$ embodiment provides the method according to the 97$^{th}$ embodiment, wherein the SEI message is a first SEI message that carries the multiplexing information which comprises a number of auxiliary pictures, a type, a bit depth, a width and a height of each auxiliary picture, whether each auxiliary picture is spatially aligned and related parameters if spatial alignment is applied;

wherein the same or a different SEI message carries association information comprising a dictionary;

wherein the same or a different SEI message carries temporal information which comprises whether each auxiliary picture is temporally aligned and related parameters if temporal alignment is applied;

wherein the same or a different SEI message carries offset information which comprises whether each auxiliary picture has aligned origin and related offset parameters if origin is not aligned.

A 99$^{th}$ embodiment provides the method according to one of the 1$^{st}$ to 90$^{th}$ embodiments, wherein metadata generated for describing the multiplexing rule is provided as part of a file format.

A 100$^{th}$ embodiment provides the method according to the 99$^{th}$ embodiment, wherein the metadata is signalled using structures in an ISO Base Media File Format; or files related to a file format standard;

wherein multiplexing information is signalled as untimed or static metadata in a box contained in a *trak* structure; and

the multiplexed data values is carried as a video track; or

the multiplexed data values is carried as an auxiliary video track next to a primary video track that carries a sequence of primary pictures.

A 101st embodiment provides a method for decoding a plurality of multiplexed data values, the method comprising: obtaining the plurality of multiplexed data values;

deriving a demultiplexing rule for the multiplexed data values, e.g., from metadata; and

reconstructing, from each of the plurality of multiplexed data values at least a first data value and a second data value [possibly at least a third data value] using the demultiplexing rule.

A 102nd embodiment provides the method according to the 101st embodiment, further comprising:

obtaining metadata indicating sample values used for a padding of a first data value or a second data value;

discarding the sample values used for the padding from the reconstructing.

A 103rd embodiment provides the method according to the 101st or 102nd embodiment, further comprising:

obtaining a dictionary used for constructing the multiplexed data values; and

transforming the dictionary for mapping the multiplexed data values to tuples indicating first and second data values.

A 104th embodiment provides the method according to one of the 101st to 103rd embodiments, further comprising:

using a logic to reconstruct first and second data values from the multiplexed data values;
wherein the logic comprises: mapping a decoded multiplexed data value to a closest value retrieved from a dictionary.

A 105th embodiment provides a device comprising a processing unit, configured for executing at least one of

the method according to one of the 1st to 100th embodiments ; and

the method according to one of the 101st to 104th embodiments.

A 106th embodiment provides a data container obtained by providing the plurality of multiplexed data values according to one of the 1st to 100th embodiments.

A 107th embodiment provides a data stream having encoded thereinto multiplexed data values obtained by a method according to one of the 1st to 100th embodiments.

A 108th embodiment provides a non-transitory computer-readable storage medium comprising instructions which, when executed by a computer, cause the computer to carry out the method of any one of the 1st to 104th embodiments.

**List of abbreviations**

| | |
|---|---|
| AV1 | AOMedia Video 1 |
| AV2 | AOMedia Video 2 |
| AVC | ISO/IEC 14496-10 Advanced Video Coding (AVC) / ITU-T Rec. H.264 |
| AU | Access Unit |
| CVS | Coded Video Sequence |
| EVC | ISO/IEC 23094-1 Essential video coding (EVC) |
| HEVC | ISO/IEC 23008-2 High Efficiency Video Coding (HEVC) / ITU-T Rec. H.265 |

| | |
|---|---|
| ISOBMFF | ISO/IEC 14496-12 ISO Base Media File Format |
| NAL | Network Abstraction Layer |
| MPEG | Moving Picture Experts Group |
| RGB | Red Green Blue (colour space) |
| RTP | Real-time Transport Protocol |
| SDI | Scalability Dimension Information |
| SEI | Supplemental Enhancement Information |
| SPS | Sequence Parameter Set |
| VVC | ISO/IEC 23090-3 Versatile Video Coding (VVC) / ITU-T Rec. H.266 |
| VSEI | Versatile Supplemental Enhancement Information messages for coded video bitstreams / ITU-T Rec H.274 |
| XR | eXtended Reality |

**List of definitions**

**Auxiliary picture**

A picture that is auxiliary to the appearance of a scene, as the scene is captured by a conventional colour camera and represented by a conventional colour picture. Auxiliary pictures typically represent specific image features (e.g., edges, corners, shapes, textures, etc.), image regions (e.g., bounding box, background, foreground), image subjects (e.g., object, person, human body part, etc.), or scene properties.

**Auxiliary picture of limited bit depth**

An auxiliary picture with bit depth lower than conventional bit depth used for the representation and encoding of colour pictures in video systems (i.e., bit depth lower than 8). An example of an auxiliary picture of limited bit depth is a binary auxiliary picture.

**Machine task**

A specific operation performed by a trained machine learning model, or an automated algorithm (e.g., image segmentation, object detection, etc.).

**References**

[1] Geeksforgeeks, Explain Image Segmentation: Techniques and Applications, https://www.geeksforgeeks.org/explain-image-segmentation-techniques-and-applications/, (accessed 24/12/2024).

[2] Medium, Semantic vs instance vs panoptic segmentation, https://medium.com/@abhishekjainindore24/semantic-vs-instance-vs-panoptic-segmentation-b1f5023da39f, (accessed 24/12/2024).

[3] An overview of semantic image segmentation, https://www.jeremyjordan.me/semantic-segmentation/, (accessed 24/12/2024).

[4] Kaur, D. and Kaur, Y., 2014. Various image segmentation techniques: a review. International Journal of Computer Science and Mobile Computing, 3(5), pp.809-814, https://ijcsmc.com/docs/papers/May2014/V315201499a84.pdf

[5] MediaPipe, Image segmentation guide, Test benchmarks, https://ai.google.dev/edge/mediapipe/solutions/vision/image segmenter#task-benchmarks, (accessed 24/12/2024).

[6] MediaPipe, Image segmentation guide, https://ai.google.dev/edge/mediapipe/solutions/vision/image segmenter, (accessed 24/12/2024).

[7] ARCore, Understand the user’s environment with the Scene Semantics API, https://developers.google.com/ar/develop/scene-semantics, (accessed 24/12/2024).

[8] Devloper Apple, Core Image, Stylizing Filters, personSegmentation(), https://developer.apple.com/documentation/coreimage/cifilter/4401873-personsegmentation/, (accessed 24/12/2024).

[9] NVIDIA, Isaac ROS Image Segmentation, https://nvidia-isaac-ros.github.io/repositories and packages/isaac ros image segmentation/index.html, (accessed 24/12/2024).

[10] ISO/IEC 14496-10 "Information technology - Coding of audio-visual objects - Part 10: Advanced Video Coding (AVC)", https://www.iso.org/standard/83529.html

[11] ISO/IEC 23008-2:2023 "Information technology - High efficiency coding and media delivery in heterogeneous

environments - Part 2: High efficiency video coding (HEVC)", https://www.iso.org/standard/85457.html
[12] ISO/IEC 23090-3:2022 "Information technology - Coded representation of immersive media - Part 3: Versatile video coding (VVC)",
[13] Depth image compression by colourization for Intel RealSense Depth Cameras, https://dev.intelrealsense.com/docs/depth-image-compression-by-colorization-for-intel-realsense-depth-cameras, (accessed 24/12/2024).
[14] ISO/IEC 14496-12 "Information technology - Coding of audio-visual objects - Part 12: ISO base media file format", https://www.iso.org/standard/83102.html
[15] ISO/IEC 23002-7:2022 "Information technology - MPEG video technologies - Part 7: Versatile supplemental enhancement information messages for coded video bitstreams", https://www.iso.org/standard/83530.html
[16] ISO/IEC 23094-1:2020, "Information technology - General video coding - Part 1: Essential video coding (EVC)", https://www.iso.org/standard/57797.html
[17] AV1 Bitstream & Decoding Process Specification, http://aomedia.org/av1/specification/
[18] ISO/IEC 14496-15 "Information technology - Coding of audio-visual objects - Part 15: Carriage of network abstraction layer (NAL) unit structured video in the ISO base media file format" https://www.iso.org/standard/83336.html

## Claims

**1.** A method for encoding a plurality of arrays of data values, the method comprising:

obtaining a first array comprising a plurality of first fields containing first data values; and obtaining at least a second array comprising a plurality of second fields containing second data values;
determining a plurality of multiplexed data values from the plurality of first fields and the plurality of second fields by multiplexing the first data values and the second data values according to a multiplexing rule;
providing the plurality of multiplexed data values.

**2.** The method according to claim 1, further comprising:

generating metadata describing the multiplexing rule; and
providing the metadata, e.g., together with the plurality of multiplexed data values.

**3.** The method according to claim 1 or 2, further comprising:
determining association information associating a tuple comprising a first data value and a second data value on the one hand with the multiplexed data value on the other hand; such that the multiplexing rule is based on the association information.

**4.** The method according to one of previous claims, wherein providing the plurality of multiplexed data values comprises: encoding a multiplexed array comprising the plurality of multiplexed data values together with the metadata generated for describing the multiplexing rule.

**5.** The method according to one of claims 1 to 4, wherein metadata generated for describing the multiplexing rule is provided as part of a video bitstream; wherein the multiplexed data values are encoded as a video frame; and wherein the metadata is related to reconstructing the first array and the second array from the multiplexed data values.

**6.** The method according to claim 5, wherein metadata generated for describing the multiplexing rule is signalled using at least one Supplemental Enhancement Information, SEI, message; and/or using an auxiliary picture.

**7.** The method according to claim 6, wherein the at least one SEI message carries multiplexing information comprising a number of auxiliary pictures, a type and a bit depth of each auxiliary picture, and association information associating a tuple comprising a first data value and a second data value on the one hand with the multiplexed data value on the other hand; such that the multiplexing rule is based on the association information; and/or
comprises at least one of:

information specifying a number of the auxiliary pictures contained in the multiplexed picture;
information specifying an identifier of the type of the i-th auxiliary picture;
information specifying a bit depth of the i-th auxiliary picture;
information specifying a number of the multiplexed picture sample values;

information specifying a j-th multiplexed picture sample value; and/or
information specifying an auxiliary picture sample value of the k-th auxiliary picture that corresponds to the j-th multiplexed picture sample value;
information specifying a width of the i-th auxiliary picture.
information specifying a height of the i-th auxiliary picture.
information specifying whether the i-th auxiliary picture is spatially aligned;
information specifying an identifier of the type of spatial alignment applied to the i-th auxiliary picture;
information specifying an identifier of the algorithm used for resampling the i-th auxiliary picture;
information specifying a value used to indicate the undefined sample value for the i-th auxiliary picture;
information specifying a column of the multiplexed picture that corresponds to the first column of the i-th auxiliary picture;
information specifying a column of the multiplexed picture that corresponds to the last column of the i-th auxiliary picture;
information specifying a row of the multiplexed picture that corresponds to the first row of the i-th auxiliary picture;
information specifying a row of the multiplexed picture that corresponds to the last row of the i-th auxiliary picture;
a dictionary; and
temporal information which comprises whether each auxiliary picture is temporally aligned and/or related parameters if temporal alignment is applied.

**8.** The method according to one of claims 5 to 7, wherein the multiplexed data values are part of a multiplexed picture that is carried using one auxiliary picture;

wherein a sequence of multiplexed data is encoded as a sequence of multiplexed pictures and constitutes an auxiliary layer associated to a primary layer;
wherein the sequence of multiplexed data corresponds to the sequence of multiplexed pictures, constituting the multiplexed auxiliary layer, and the primary layer contains the primary picture sequence; wherein the metadata is generated to interpret the multiplexed picture sample values, wherein said metadata is signalled in a SEI message;
wherein the SEI message comprises information indicating an auxiliary picture as a multiplexed picture.

**9.** The method according to one of claims 1 to 4, wherein metadata generated for describing the multiplexing rule is provided as part of a file format.

**10.** The method according to claim 9, wherein the metadata is signalled using structures in an ISO Base Media File Format; or files related to a file format standard;

wherein multiplexing information is signalled as untimed or static metadata in a box contained in a *trak* structure; and
the multiplexed data values is carried as a video track; or
the multiplexed data values is carried as an auxiliary video track next to a primary video track that carries a sequence of primary pictures.

**11.** A method for decoding a plurality of multiplexed data values, the method comprising:
obtaining the plurality of multiplexed data values;

deriving a demultiplexing rule for the multiplexed data values, e.g., from metadata; and
reconstructing, from each of the plurality of multiplexed data values at least a first data value and a second data value using the demultiplexing rule.

**12.** A device comprising a processing unit, configured for executing at least one of:

the method according to one of claim 1 to 10; and
the method according to claim 11.

**13.** A data container obtained by providing the plurality of multiplexed data values according to one of claims 1 to 10.

**14.** A data stream having encoded thereinto multiplexed data values obtained by a method according to one of claims 1 to 10.

**15.** A non-transitory computer-readable storage medium comprising instructions which, when executed by a computer, cause the computer to carry out the method of any one of claims 1 to 11.

(a) Image

(b) Semantic segmentation

(c) Instance segmentation

(d) Panoptic segmentation

Fig. 1

segmented
1: Person
2: Purse
3: Plants/Grass.
4 Sidewa k
3 3 3 3 3 3 3 3 3 3 3 3 5 5 5 5 5 5
3 3 3 3 3 3 3 3 3 3 3 3 5 5 5 5 5 5
3 3 3 3 3 3 1 1 3 3 3 3 5 5 5 5 5 5
3 3 3 3 3 1 1 1 1 3 3 3 5 5 5 5 5 5
3 3 3 3 3 3 1 1 3 3 3 5 5 5 5 5 5 5
5 5 3 3 3 3 1 1 3 3 5 5 5 5 5 5 5 5
4 4 3 4 1 1 1 1 1 1 4 4 4 5 5 5 5 5
4 4 3 4 1 1 1 1 1 1 4 4 4 4 4 5 5 5
4 4 4 1 1 1 1 1 1 1 1 4 4 4 4 4 4 4
3 3 3 1 1 1 1 1 1 1 1 4 4 4 4 4 4 4
3 3 3 1 2 2 1 1 1 1 1 4 4 4 4 4 4 4
3 3 3 1 2 2 1 1 1 1 1 4 4 4 4 4 4 4

Input

Semantic Labels

**Fig. 2**

Fig. 3

UNLABELED
SKY
BUILDING
TREE
ROAD
SIDEWALK
TERRAIN
STRUCTURE
OBJECT
VEHICLE
PERSON
WATER
Hide legend

Fig. 4

Fig. 5a Fig. 5b Fig. 5c

Fig. 6a

Fig. 6b

Fig. 7a

Fig. 7b

Interleaved colour component plane of side-by-side packed decoded frame
Side-by-side packing rearrangement
Samples of colour component plane of constituent frame 0
Upconversion processing
Upconverted colour component plane of constituent frame 0
Samples of colour component plane of constituent frame 1
Upconversion processing
Upconverted colour component plane of constituent frame 1
H.265v2(14)_FD.4

Fig. 8

Side-by-side packing rearrangement
Interleaved colour component plane of side-by-side packed decoded frame
Samples of colour component plane of constituent frame 0
Samples of colour component plane of constituent frame 1
Upconversion processing
Upconversion processing
Upconverted colour component plane of constituent frame 0
Upconverted colour component plane of constituent frame 1
H.265v2(14)_FD.5

Fig. 9

Interleaved colour component plane of top-bottom packed decoded frame
Top-bottom packing rearrangement
Samples of colour component plane of constituent frame 0
Upconversion processing
Upconverted colour component plane of constituent frame 0
Samples of colour component plane of constituent frame 1
Upconversion processing
Upconverted colour component plane of constituent frame 1
H.265v2(14)_FD.6

Fig. 10

Top-bottom packing rearrangement
Upconversion processing
Upconversion processing
Interleaved colour component plane of top-bottom packed decoded frame
Samples of colour component plane of constituent frame 0
Upconverted colour component plane of constituent frame 0
Samples of colour component plane of constituent frame 1
Upconverted colour component plane of constituent frame 1
H.265v2(14)_FD.7


Fig. 11

Side-by-side packed colour component plane of decoded frame with quincunx sampling
Side-by side quincunx packing rearrangement
Samples of colour component plane of constituent frame 0
Upconversion processing
Upconverted colour component plane of constituent frame 0
Samples of colour component plane of constituent frame 1
Upconversion processing
Upconverted colour component plane of constituent frame 1
H.265v2(14)_F D.8

Fig. 12

Sequentially decoded frames with temporal interleaving frame arrangement
2N
2N+1
2N+2
2N+3
t
Temporal interleaving decomposition
2N
2N+2
Samples of colour component plane of constituent frames 0
2N+1
2N+3
Samples of colour component plane of constituent frames 1
t
H.265v2(14)_FD.9


Fig. 13

Fig. 14
1400
1402
1404
1408
1412
1414
1416
Camera
Local device
Network
Server
Network
Remote device
Machine task
Auxiliary picture generation
Encoding
Storage / Transmission
1406a
1406b
1406c
1406d
Reception
Storage / Transmission
Reception
Storage / Decoding
Reconstructed auxiliary picture
1418a
1418b
1418c

1500
1402
1504
1408
1412
Camera
Local device
Network
Server
Machine task
Auxiliary picture generation
1406b1
1406a1
Machine task
Auxiliary picture generation
Multiplexing
Encoding
Storage / Transmission
1406a2
1406b2
1502
1406c'
1406d'
Machine task
Auxiliary picture generation
1406an
1406bn
Reception
Storage / Transmission

Fig. 15a

1412
1414
1516
Server
Network
Remote device
Reception
Storage /
Transmission
Reception
Storage /
Decoding
De-multiplexing
Reconstructed
auxiliary picture
Reconstructed
auxiliary picture
Reconstructed
auxiliary picture
1418a'
1418b'
1514
$1418c_1$
$1418c_n$

Fig. 15b

1700
0 0 0 0
0 0 0 0
1 1 1 1
1 1 1 1
Auxiliary picture 1
1716
1702$_1$
1706
1718
1712
1704
Multiplexor
31 95 31 95
95 31 95 31
159 223 159 223
223 159 223 159
Multiplexed picture
Encoding
1716
0 1 0 1
1 0 1 0
0 1 0 1
1 0 1 0
Auxiliary picture 2
1702$_2$
Dictionary
Key Value
(0, 0) 31
(0, 1) 95
(1, 0) 159
(1, 1) 223
Metadata
1708
1714

Fig. 16a

1700
1702'$_1$
1704'
Decoding
31 95 31 95
95 31 95 31
159 223 159 223
223 159 223 159
Reconstructed multiplexed picture
De-multiplexor
Metadata
Dictionary
Key Value
31 (0, 0)
95 (0, 1)
159 (1, 0)
223 (1, 1)
0 0 0 0
0 0 0 0
1 1 1 1
1 1 1 1
Reconstructed auxiliary picture 1
1702'$_2$
0 1 0 1
1 0 1 0
0 1 0 1
1 0 1 0
Reconstructed auxiliary picture 2

Fig. 16b

1800
1702'1
0 0 0 0
0 0 0 0
1 1 1 1
1 1 1 1
Source picture 1
0 1 0 1
1 0 1 0
0 1 0 1
1 0 1 0
Source picture 2
1702'2
Multiplexor
Dictionary
Key Value
(0, 0) 31
(0, 1) 95
(1, 0) 159
(1, 1) 223
31 95 31 95
95 31 95 31
159 223 159 223
223 159 223 159
Multiplexed picture
Metadata
Encoding

Fig. 17a

1800
Decoding
31 95 31 95
95 31 95 31
159 223 159 223
223 159 223 159
Reconstructed multiplexed picture
De-multiplexor
Metadata
Dictionary
Key Value
31 (0, 0)
95 (0, 1)
159 (1, 0)
223 (1, 1)
0 0 0 0
0 0 0 0
1 1 1 1
1 1 1 1
Reconstructed source picture 1
0 1 0 1
1 0 1 0
0 1 0 1
1 0 1 0
Reconstructed source picture 2

Fig. 17b

| | | | |
|---|---|---|---|
| 0 | 1 | 1 | 0 |
| 0 | 1 | 1 | 0 |
| 0 | 1 | 1 | 0 |
| 0 | 1 | 1 | 0 |

Source 2d array X

0 1
1 0
Source 2d array Y
0 0 1 1
0 0 1 1
1 1 0 0
1 1 0 0
2d array Y'

| | | | |
|---|---|---|---|
| 31 | 159 | 223 | 95 |
| 31 | 159 | 223 | 95 |
| 95 | 223 | 159 | 31 |
| 95 | 223 | 159 | 31 |

Multiplexed 2d array

Fig. 18

| 0 | 1 | 1 | 0 |
|---|---|---|---|
| 0 | 1 | 1 | 0 |
| 0 | 1 | 1 | 0 |
| 0 | 1 | 1 | 0 |

Source 2d array X

| 0 | 1 |
|---|---|
| 1 | 0 |

Source 2d array Y

| 0 | 1 | u | u |
|---|---|---|---|
| 1 | 0 | u | u |
| u | u | u | u |
| u | u | u | u |

2d array Y'

| 21 | 150 | 236 | 193 |
|---|---|---|---|
| 64 | 107 | 236 | 193 |
| 193 | 236 | 236 | 193 |
| 193 | 236 | 236 | 193 |

Multiplexed 2d array

Fig. 19

| 0 | 1 | 1 | 0 |
|---|---|---|---|
| 0 | 1 | 1 | 0 |
| 0 | 1 | 1 | 0 |
| 0 | 1 | 1 | 0 |

Source 2d array X

0 1
1 0
0 1 0 0
1 0 0 0
0 0 0 0
0 0 0 0

Source 2d array Y

2d array Y'

| 31 | 223 | 159 | 31 |
|---|---|---|---|
| 95 | 159 | 159 | 31 |
| 31 | 159 | 159 | 31 |
| 31 | 159 | 159 | 31 |

Multiplexed 2d array

Fig. 20

$\vec{d}_X$
$\vec{d}_Y$
Primary picture and source 2d arrays X, Y
$\vec{d}_Y$
Source 2d arrays X, Y with same difference of spatial origins
2d array X'
2d array Y'

Fig. 21

$\vec{d}_X$
$\vec{d}_Y$
Primary picture and source 2d arrays X, Y
Source 2d arrays X, Y after shifting the spatial origin of Y
2d array X'
2d array Y'

Fig. 22

Fig. 23

ISOBMFF File

trak

'hdlr'
handler_type=vide

'hev1'

'mibx'

mdat

Video sample (Multiplexed picture)

Video sample (Multiplexed picture)

...

Video sample (Multiplexed picture)

Fig. 24

ISOBMFF File
trak
'hdlr'
handler_type=vide
'hev1'
'tkhd'
track_id=0
trak
'hdlr'
handler_type=auxv
'hev1'
'mibx'
'tkhd'
track_id=1
'tref'
'cdsc'
track_IDs=0
mdat
Video sample (Primary picture)
Video sample (Primary picture)
...
Video sample (Primary picture)
mdat
Video sample (Multiplexed picture)
Video sample (Multiplexed picture)
...
Video sample (Multiplexed picture)

Fig. 25

900
901
computing unit
902
ROM
903
RAM
904
905
I/O interface
906
input unit
907
output unit
908
storage unit
909
communica-tion unit

Fig. 26

Europäisches Patentamt
European Patent Office
Office européen des brevets

# EUROPEAN SEARCH REPORT

Application Number
EP 25 31 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2025/056043 A1 (OH SEJIN [US]) 13 February 2025 (2025-02-13) * paragraphs [0027] - [0034]; figures 1-4 * | 1-15 | INV. H04N19/70 G06T7/11 H04N21/236 H04N21/854 ADD. H04N21/434 |
| A | HOLLMANN (ERICSSON) C ET AL: "AHG8: Updates for technical report", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0143 10 April 2024 (2024-04-10), XP030317473, Retrieved from the Internet: URL:https://jvet-experts.org/doc_end_user/documents/34_Rennes/wg11/JVET-AH0143-v1.zip JVET-AH0143_TR.docx [retrieved on 2024-04-10] * pages 9-10, paragraphs 6.2,9.2-9.4 * | 1-15 | |
| A | ZHENG (DJI) X ET AL: "Mask information for Annotated region SEI message", 32. JCT-VC MEETING; 20180712 - 20180718; LJUBLJANA; (JOINT COLLABORATIVE TEAM ON VIDEO CODING OF ISO/IEC JTC1/SC29/WG11 AND ITU-T SG.16 ), , no. JCTVC-AF0024 5 July 2018 (2018-07-05), XP030198546, Retrieved from the Internet: URL:http://phenix.int-evry.fr/jct/doc_end_user/documents/32_Ljubljana/wg11/JCTVC-AF0024-v1.zip JCTVC-AF0024.docx [retrieved on 2018-07-05] * abstract * | 1-15 | TECHNICAL FIELDS SEARCHED (IPC) H04N G06T |

-/--

The present search report has been drawn up for all claims

1

| Place of search | Date of completion of the search | Examiner |
|---|---|---|
| Munich | 23 June 2025 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 25 31 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Report of 122nd Meeting", 123. MPEG MEETING; 20180716 - 20180720; LJUBLJANA; (MOTION PICTURE EXPERT GROUP OR ISO/IEC JTC1/SC29/WG11), , no. n17696 8 October 2018 (2018-10-08), XP030190509, Retrieved from the Internet: URL:http://phenix.int-evry.fr/mpeg/doc_end_user/documents/123_Ljubljana/wg11/w17696.zip w17696.docx [retrieved on 2018-10-08] * the whole document * ----- | 1-15 | |
| A | JILL BOYCE (INTEL) ET AL: "Depth coding for immersive video", 127. MPEG MEETING; 20190708 - 20190712; GOTHENBURG; (MOTION PICTURE EXPERT GROUP OR ISO/IEC JTC1/SC29/WG11), , no. m49342 4 July 2019 (2019-07-04), XP030207603, Retrieved from the Internet: URL:http://phenix.int-evry.fr/mpeg/doc_end_user/documents/127_Gothenburg/wg11/m49342-v1-M39342depthcodingforMIV.zip M49342 depth coding for MIV.docx [retrieved on 2019-07-04] * the whole document * ----- | 1-15 | TECHNICAL FIELDS SEARCHED (IPC) |

-/--

The present search report has been drawn up for all claims

1

| Place of search | Date of completion of the search | Examiner |
|---|---|---|
| Munich | 23 June 2025 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number
EP 25 31 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIRILLOV ALEXANDER ET AL: "Panoptic Segmentation", 2019 IEEE/CVF CONFERENCE ON COMPUTER VISION AND PATTERN RECOGNITION (CVPR), IEEE, 15 June 2019 (2019-06-15), pages 9396-9405, XP033686328, DOI: 10.1109/CVPR.2019.00963 [retrieved on 2020-01-08] * the whole document * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 23 June 2025 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 3 of 3

# ANNEX TO THE EUROPEAN SEARCH REPORT ON EUROPEAN PATENT APPLICATION NO. EP 25 31 5049

This annex lists the patent family members relating to the patent documents cited in the above-mentioned European search report. The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| US 2025056043 A1 | 13-02-2025 | US 2025056043 A1 | 13-02-2025 |
| | | WO 2024215930 A1 | 17-10-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Geeksforgeeks, Explain Image Segmentation: Techniques and Applications*, 24 December 2024, https://www.geeksforgeeks.org/explain-image-segmentation-techniques-and-applications/
- *Medium, Semantic vs instance vs panoptic segmentation*, 24 December 2024, https://medium.com/@abhishekjainindore24/semantic-vs-instance-vs-panoptic-segmentation-b1f5023da39f
- *An overview of semantic image segmentation*, 24 December 2024, https://www.jeremyjordan.me/semantic-segmentation
- **KAUR, D.** ; **KAUR, Y**. Various image segmentation techniques: a review. *International Journal of Computer Science and Mobile Computing*, 2014, vol. 3 (5), 809-814, https://ijcsmc.com/docs/papers/May2014/V315201499a84.pdf
- *MediaPipe, Image segmentation guide, Test benchmarks*, 24 December 2024, https://ai.google.dev/edge/mediapipe/solutions/vision/image segmenter#task-benchmarks
- *MediaPipe, Image segmentation guide*, 24 December 2024, https://ai.google.dev/edge/mediapipe/solutions/vision/image segmenter
- *ARCore, Understand the user's environment with the Scene Semantics API*, 24 December 2024, https://developers.google.com/ar/develop/scene-semantics
- *Devloper Apple, Core Image, Stylizing Filters, personSegmentation*, 24 December 2024, https://developer.apple.com/documentation/coreimage/cifilter/4401873-personsegmentation
- *NVIDIA, Isaac ROS Image Segmentation*, 24 December 2024, ttps://nvidia-isaac-ros.github.io/repositories and packages/isaac ros image segmentation/index.html
- Information technology - Coding of audio-visual objects - Part 10: Advanced Video Coding (AVC). *ISO/IEC 14496-10*, https://www.iso.org/standard/83529.html
- Information technology - High efficiency coding and media delivery in heterogeneous environments - Part 2: High efficiency video coding (HEVC). *ISO/IEC 23008-2:2023*, https://www.iso.org/standard/85457.html
- Information technology - Coded representation of immersive media - Part 3: Versatile video coding (VVC). *ISO/IEC 23090-3:2022*
- *Depth image compression by colourization for Intel RealSense Depth Cameras*, 24 December 2024, https://dev.intelrealsense.com/docs/depth-image-compression-by-colorization-for-intel-realsense-depth-cameras
- Information technology - Coding of audio-visual objects - Part 12: ISO base media file format. *ISO/IEC 14496-12*, https://www.iso.org/standard/83102.html
- Information technology - MPEG video technologies - Part 7: Versatile supplemental enhancement information messages for coded video bitstreams. *ISO/IEC 23002-7:2022*, https://www.iso.org/standard/83530.html
- Information technology - General video coding - Part 1: Essential video coding (EVC). *ISO/IEC 23094-1:2020*, https://www.iso.org/standard/57797.html
- *AV1 Bitstream & Decoding Process Specification*, http://aomedia.org/av1/specification
- Information technology - Coding of audio-visual objects - Part 15: Carriage of network abstraction layer (NAL) unit structured video in the ISO base media file format. *ISO/IEC 14496-15*, https://www.iso.org/standard/83336.html